(19) Europäisches Patentamt / European Patent Office / Office européen des brevets

(11) **EP 2 743 078 B1**

(12) **EUROPEAN PATENT SPECIFICATION**

(45) Date of publication and mention
of the grant of the patent:
**26.12.2018 Bulletin 2018/52**

(21) Application number: **12821769.2**

(22) Date of filing: **08.08.2012**

(51) Int Cl.:
*B32B 7/02* *(2006.01)*          *B32B 27/20* *(2006.01)*
*C08J 7/04* *(2006.01)*          *C08J 5/12* *(2006.01)*

(86) International application number:
**PCT/JP2012/070141**

(87) International publication number:
**WO 2013/022011 (14.02.2013 Gazette 2013/07)**

(54) **TRANSPARENT LAMINATED FILM**

TRANSPARENTER LAMINIERTER FILM

FILM STRATIFIÉ TRANSPARENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.08.2011   JP 2011173773
22.08.2011   JP 2011180645
24.08.2011   JP 2011182863
24.08.2011   JP 2011182873**

(43) Date of publication of application:
**18.06.2014   Bulletin 2014/25**

(73) Proprietor: **Mitsubishi Chemical Corporation
Tokyo 100-8251 (JP)**

(72) Inventors:
• **YAMAMOTO, Raian**
**Nagahama-shi**
**Shiga 526-8660 (JP)**
• **KINOSHITA, Shouhei**
**Nagahama-shi**
**Shiga 526-8660 (JP)**
• **SAKATA, Nobuhiro**
**Nagahama-shi**
**Shiga 526-8660 (JP)**
• **SHINOURA, Yasutaka**
**Hiratsuka-shi**
**Kanagawa 254-8614 (JP)**
• **TAKAGI, Jun**
**Nagahama-shi**
**Shiga 526-8660 (JP)**

(74) Representative: **Hoffmann Eitle
Patent- und Rechtsanwälte PartmbB
Arabellastraße 30
81925 München (DE)**

(56) References cited:
WO-A1-2010/140343      WO-A2-2010/055508
JP-A- 2001 277 455      JP-A- 2002 275 296
JP-A- 2008 100 509      JP-A- 2008 265 318
JP-A- 2009 258 720      US-A1- 2001 038 907

**Description**

[Technical Field]

The present invention relates to a transparent laminated film that can be used, for instance, as a base material such as for a solar battery, an organic solar battery, a flexible display, an organic EL illuminator or a touch panel. Specifically, it relates to a transparent laminated film provided with high transparency at the same time as dimensional stability when heating is carried out in the event of, for instance, circuit-forming, placing various elements on the film, or the like.

[Technical background]

In addition to transparency, lightness in weight and flexibility, a variety of properties such as high resistance to heat are demanded of substrates, front sheets, back sheets and the like, that are used in illuminators, display members, solar batteries, organic solar batteries, flexible displays, organic EL illuminators and the like.

In prior art, glass has been used as substrate material for various display elements such as organic EL, solar battery, and the like. However, not only glass has such disadvantages as being fragile, heavy and difficult to make thinner, glass does not have sufficient material qualities regarding thinning and lightning of the weight of displays and flexibilization of displays of recent years. Therefore, thin and lightweight film-shaped substrates made of transparent resin are being examined as alternative materials to glass.

When film-shaped substrates made of resin are used in such applications, a high resistance to heat is demanded of the films. For instance, when a circuit such as of TFT is formed over a film, so as not to provoke pattern offsets during circuit formation, a high dimensional stability is demanded of the film, at around 200°C, the heat treatment temperature of TFT.

However, the heat dimensional stability under high-temperature atmosphere of 150°C or higher (concretely, 150°C to 200°C) is insufficient for conventional polyester films of the prior art.

Therefore, in recent years, resin films having high heat dimensional stability are being sought as films for gas barrier fabrication use or films for flexible display substrate use.

As means for conferring dimensional stability under high temperature to a resin film, for instance, the method of adding a heat relaxation treatment (also referred to as "annealing treatment" or "heat-setting treatment") as the last means of a film fabrication process is described in Patent Document 1.

In addition, the methods of forming various coating films on the surface of films fabricated by conventional processes are described in Patent Documents 2 and 3.

A composite film, which is a film containing a polymer substrate and a flattened coating layer, having a barrier layer formed on the surface of the coating layer is described in Patent Document 4. As the polymer substrate is heat-set and heat-stabilized, the composite film has high dimensional stability.

Furthermore, a transparent multilaminated sheet provided with a layer which average linear expansion coefficient is 50 ppm/K or lower (A layer) and a layer which modulus of elongation is 1 GPa or lower (B layer) is described in Patent Document 5. More concretely, transparent multilaminated sheets comprising three layers, B layer/A layer/B layer, and the like, are described, and the multilaminated sheets are described to have a total light transmittance of 91% and an average linear expansion coefficient of 43 ppm/K, and excellent transparency and dimensional stability.

In addition, polyimides, polyamides, and the like, with high dimensional stability while at high temperature and high transparency are described in Patent Document 6. Since almost no orientation is present due to the fact that these are formed into films by the flow-casting method, no shrinking occurs when heating is carried out.

US 2001/038907 A1 discloses transparent and scratch resistant laminated films having a surface elastic modulus of 5 GPa to 15GPa on at least one side thereof.

[Prior Art Documents]

[Patent Documents]

[Patent Document 1] Japanese Patent Application Laid-open No. 2008-265318
[Patent Document 2] Japanese Patent Application Laid-open No. 2001-277455
[Patent Document 3] Japanese Patent No. 2952769
[Patent Document 4] Japanese translation of PCT international application No. 2011-518055
[Patent Document 5] Japanese Patent Application Laid-open No. 2007-298732

[Patent Document 6] Japanese Patent Application Laid-open No. S61-141738

[Summary of the invention]

[Problems to be solved by the invention]

As is described in the above Patent Document 1, it is common for a transparent resin film that is used in prior art as a base material sheet of a touch panel, or the like, to be produced by having a heat-setting treatment performed in order to elevate the dimensional stability at high temperatures (for instance, 200°C or higher). Therefore, this bears the problem that the production process becomes complex and that the production cost of the film *per se* becomes high.

Thus, in view of the problems of the prior art, an object of the present invention is to provide a novel transparent laminated film that has excellent transparency and heat dimensional stability at high temperatures (for instance, 200°C or higher), and, moreover, can be produced by a simple production process.

[Means to solve the problems]

The present invention proposes a transparent laminated film according to claim 1, which is a laminated film having a cured layer on both the front and the back sides of a base film, the storage elastic modulus (E') by dynamic viscoelasticity measurement in at least one direction of the laminated film at 200°C temperature being greater than the storage elastic modulus (E') in at least one direction of the base film in the same conditions, and the total light transmittance of the laminated film being 80% or greater.

[Effects of the invention]

By being provided with a cured layer on both the front and the back sides of the base film so that the storage elastic modulus (E') in at least one direction of the laminated film at 200°C temperature becomes greater than the storage elastic modulus (E') in at least one direction of the base film, the transparent laminated film proposed by the present invention allows a transparent laminated film having excellent transparency and heat dimensional stability at high temperatures (for instance, 200°C or higher) to be obtained without conventionally carrying out a heat-setting treatment. Therefore, a transparent laminated film having excellent transparency and heat dimensional stability at high temperatures (for instance, 200°C or higher) can be obtained by a simple production process.

In this way, since the cured layers provided on both the front and the back sides of the base film can resist the stress of the base film shrinking while at high temperatures, the transparent laminated film proposed by the present invention has the advantage that dimensional change (heat dimensional stability) due to treatment by heating is small, while transparency is maintained.

Thus, the transparent laminated film proposed by the present invention can be used suitably, for instance, in photoelectric element substrates or the like, in addition to substrates for display materials such as of liquid crystal displays, organic light-emitting displays (OLEDs), electrophoretic displays (electronic papers), touch panels, color filters and back lights, and substrates of solar batteries.

[Brief description of the drawings]

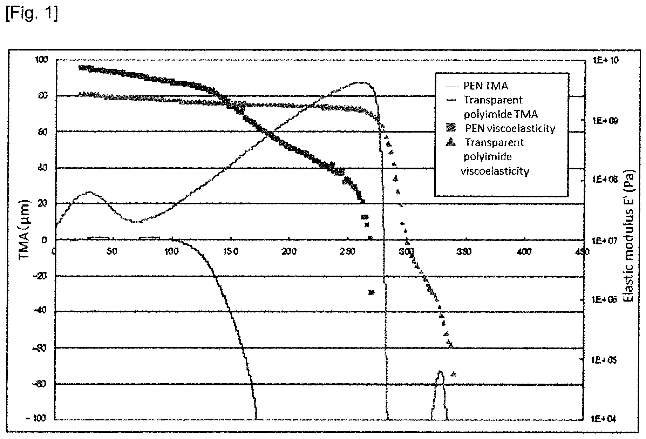

[Fig. 1] Figure showing, for a transparent laminated film according to one example of the third embodiment described below, the change in storage elastic modulus (E') and dimensional change by thermomechanical property test (TMA) in each layer.

[Embodiments for carrying out the invention]

Next, an example of embodiment of the present invention will be described. However, the present invention is not limited to the embodiment described below.

<Transparent laminated film>

The transparent laminated film according to one example of the embodiment of the present invention (hereafter referred to as "the present laminated film") is a transparent laminated film having a cured layer on both the front and the back sides of the base film.

As the present laminated film has a predetermined cured layer on both the front and the back sides of the base film, the cured layers counteract the shrinkage stress of the base film in high-temperature regions, allowing the shrinkage to be alleviated. Therefore, the dimensional stability of the present laminated film against shrinkage while at high temperatures can be improved.

The present laminated film may be laminated by stacking cured layers directly on both the front and the back surfaces of the base film, and, in addition, another layer may be intercalated between the base film and the cured layer. For instance, it is possible to intercalate an anchor coat layer, or the like, between the base film and the cured layer.

<Cured layer>

Since the cured layer is a layer formed by a curable resin composition containing a curable resin, it is a layer that contains a curable resin composition.

The cured layer has the role of conferring high dimensional stability to the present laminated film by rendering the storage elastic modulus (E') of the present laminated film while at high temperatures (for instance, 200°C or higher) greater than the storage elastic modulus (E') of the base film in the same conditions.

Since it is common for the "cured layer" of the present laminated film to be formed by coating and "curing" a curable resin composition on both the front and the back sides of the base film, the designation is "cured layer". However, the forming method for the cured layer is not limited to such methods.

In order to render the storage elastic modulus (E') of the present laminated film at 200°C temperature greater than the storage elastic modulus (E') of the base film, for instance, it suffices to form the cured layer with the conditions indicated in (1) to (3) below:

(1) Suitably select the curable resin composition to form a cured layer for which the storage elastic modulus (E') while at high temperatures (for instance, 200°C or higher) is greater than that of the base film.
More concretely, it suffices to use a curable resin composition having a molecule that possesses a rigid backbone or use a curable resin composition capable of forming a 3-dimensional network structure, as materials forming the cured layer.
(2) Form a cured layer filled with microparticles.
(3) Render the thickness sum of both surfaces of the cured layer greater than the thickness of the base film.

Of the methods indicated in (1) to (3) above, any one or a combination of two or more can be used; adopting the technique of (2) is desirable from the point of canceling out the shrinkage stress of the base material with particles having high rigidity, and, in addition, in order to increase the effect thereof, adopting the two techniques of (2) and (3) as well as (1) and (2), and furthermore, the three techniques of (1) to (3), is more desirable.

(Curable resin composition)

The curable resin compositions for forming cured layer of the above condition (1), that is to say, storage elastic modulus (E') while at high temperatures (at 200°C or higher) is greater than that of the base film, have a rigid backbone inside the molecule.

The photocurable resin having a rigid backbone inside the molecule are resins having inside the molecule a backbone selected from cyclic aliphatic hydrocarbon, aromatic hydrocarbon, cyclic acetal, cyclic ketone or siloxane and having a glass transition temperature (Tg) higher than 200°C.

Not forming part of the present invention, multifunctional photocurable resins could be of interest, for instance, resins with a (meth)acrylate having two or more acryloyl groups as monomer constituent can be cited, such as, trimethylol propane triacrylate, trimethylol propane trimethacrylate, ditrimethylol propane tetraacrylate, ditrimethylol propane tetramethacrylate, pentaerythritol triacrylate, pentaerythritol trimethacrylate, pentaerythritol tetraacrylate, pentaerythritol tetramethacrylate, dipentaerythritol hexaacrylate and dipentaerythritol hexamethacrylate.

Using such multifunctional photocurable resin allows a cured layer having a 3-dimensional network structure to be formed, and allows the cured layer to hold a high storage elastic modulus (E').

Among the above, curable resins having inside the molecule a fluorene backbone, which is an aromatic hydrocarbon, and curable resins having a silsesquioxane backbone are desirable from the aspects of extremely high resistance to heat and faster curing reaction.

For the photocurable resins, one type or two or more types in combination can be used as necessary among the resins cited above.

It is desirable for these photocurable resins that 30 to 100 mass% is contained within the cured layer, of which 30 mass% or more or 70 mass% or less, and of this, 35 mass% or more or 50 mass% or less, is all the more desirable.

In the curable resin composition, other photocurable oligomers/monomers, photoinitiator, intensifier, crosslinker, UV absorbent, polymerization inhibitor, filler, thermoplastic resin, and the like, can be contained as constituents other than the photocurable resin, to extents that do not interfere with curing and physical properties such as transparency and water absorbency.

In particular, photoinitiators are essential when UV irradiation is applied as the activation energy beam. For instance, benzoin-, acetophenone-, thioxanthone-, phosphine oxide-, peroxide-based photoinitiators, and the like, can be used.

As concrete examples of the photoinitiators, for instance, benzophenone, 4,4-bis(diethylamino)benzophenone, 2,4,6-trimethyl benzophene, methyl orthobenzoyl benzoate, 4-phenyl benzophenone, t-butyl anthraquinone, 2-ethyl anthraquinone, diethoxy acetophenone, 2-hydroxy-2-methyl-1-phenylpropan-1-one, 2-hydroxy-1-{4-[4-(2-hydroxy-2-methyl-propionyl)-benzyl]phenyl}-2-methyl-propan-1-one, benzyl dimethyl ketal, 1-hydroxy cyclohexyl-phenyl ketone, benzoin methyl ether, benzoin ethyl ether, benzoin isopropyl ether, benzoin isobutyl ether, 2-methyl-[4-(methylthio)phenyl]-2-morpholino-1-propanone, 2-benzyl-2-dimethylamino-1-(4-morpholinophenyl)-butanone-1 , diethyl thioxanthone, isopropyl thioxanthone, 2,4,6-trimethylbenzoyldiphenyl phosphine oxide, bis(2,6-dimethoxybenzoyl)-2,4,4-trimethylpentyl phosphine oxide, bis(2,4,6-trimethylbenzoyl)-phenyl phosphine oxide, methylbenzoyl formate, and the like can be indicated as examples. These can be used one species alone or two or more species in combined use.

The amount of the photoinitiator is adjusted suitably according to the curability, or the like, of the composition. A typical amount of photoinitiator is 1 to 10 parts by mass with respect to 100 parts by mass of the curable resin composition.

In addition, the curable resin composition can be used by adding a solvent, as necessary. As solvents, for instance, ketones such as acetone, methyl ethyl ketone and methyl isobutyl ketone, esters such as ethyl acetate and butyl acetate, aromatics such as toluene and xylene, and furthermore cyclohexanone, isopropanol, and the like, are illustrative.

The amount used of these solvents is not limited in particular. In general, it is 0 to 300 parts by mass with respect to 100 parts by mass of the entire amount of solid content of the curable resin composition.

(Microparticle)

As one technique for rendering the storage elastic modulus (E') of the present laminated film at 200°C temperature greater than the storage elastic modulus (E') of the base film in the manner of condition (2) described earlier, the method of forming on both the front and the back sides of the base film a cured layer filled with microparticles (also referred to as "filler") in addition to the curable resin composition can be cited.

As microparticles contained in the cured layer, inorganic microparticles having transparency can be cited, such as, for instance, silicon oxide, aluminum oxide, titanium oxide, soda glass and diamond. Among these, silicon oxide microparticles are desirable from the point that storage elastic modulus of the cured layer can be improved and the points of specific gravity and costs.

Silicon oxide microparticles, of which many surface-modified ones have been developed, have high dispersibility into the photocurable resin and allow uniform cured film to be formed. As concrete examples of silicon oxide microparticle, silicon oxide microparticles in dried powder form, colloidal silica dispersed in an organic solvent (silica sol), and the like, can be cited. Among these, using colloidal silica dispersed in an organic solvent (silica sol) is desirable on the point of dispersibility.

If the purpose is to improve dispersibility, they may be silicon oxide microparticles that have been surface-treated by a silane coupling agent, a titanate based coupling agent, or the like, or silicon oxide microparticles that have been treated on the surface for dispersion-facilitation, to extents that do not extremely compromise properties such as transparency, resistance to solvent, resistance to liquid crystal, and resistance to heat.

For the microparticles, microparticles which median diameter is in the range of 1 nm to 1,000 nm are used suitably. Among them, from the point of view of securing transparency, microparticles for which the median diameter is 200 nm or less are used more suitably. Using microparticles for which the median diameter is in such a range allows transparency to be secured without giving rise to scattering phenomenon against incident light due to the Mie scattering phenomenon. In cases where the shape of the microparticle is not spherical, the median diameter refers to the arithmetic mean value of the short axis and the long axis.

In order to reduce the amount of refracted light that enters the cured layer, it is desirable that the refractive index of the microparticle is less than 1.6.

Of these, from the point of view of transparency improvement, it is desirable to use such microparticles that the refractive index difference between the resin in the curable resin composition, in particular, the resin that is the main component of the curable resin composition, and the microparticle (filler), is less than 0.2.

Furthermore, as the above microparticles, those for which the relative standard deviation of particle size is 50% or less are particularly suitable.

In order to fill microparticles into the cured layer at a high density, for instance, in order to fill so as to reach 50% by volume or greater, it is effective to reduce the inter-particle distance of the neighboring particles and bring the microparticles inside the cured layer to a packing state that is near the closest packing structure. For this purpose, it is desirable to use microparticles with aligned particle sizes, as in, the relative standard deviation of particle size is 50% or less. Using such microparticles allows the dimensional change due to shrinking that occurs caused by the orientation of the base film while at high temperatures to be reduced.

As the percentage content of microparticle in the entire cured layer, 50% by volume or greater is desirable, of which 55% by volume or greater or 90% by volume or less is more desirable, furthermore, of this, 65% by volume or greater or 80% by volume or less, and of this, in particular 72% by volume or greater is further desirable.

If 50% by volume or greater of the microparticle is included in the cured layer, the microparticle is filled in a nearer state to closest packing, and when 72% by volume or greater is reached, it is theoretically at closest packing.

By including microparticles in such ranges, the dimensional change due to shrinking that occurs caused by the orientation of the base film, or the like, during heating, can be reduced by the elastic modulus of the cured layer.

(Thickness of the cured layer)

As one technique for rendering the storage elastic modulus (E') of the present laminated film at 200°C temperature greater than the storage elastic modulus (E') of the base film in the manner of condition (3) described earlier, the method of rendering the sum of the thicknesses of the cured layers on both the front and the back sides greater than the thickness of the base film can be cited.

If the sum of the thicknesses of the cured layers on both the front and the back sides is rendered greater than the thickness of the base film, the storage elastic modulus of the present laminated film while at high temperatures can be maintained high, allowing high dimensional stability to be conferred.

From such a point of view, it is desirable that the thickness sum of the cured layers is greater than 100% of the thickness of the base film, in particular, 100% or more or 400% or less is all the more desirable, of which in particular 150% or more or 300% or less is furthermore desirable.

<Base film>

As base film used in the present laminated film, films comprising, for instance, a polyester based resin such as polyethylene terephthalate or polyethylene naphthalate, a polyphenylene sulfide resin, a polyether sulfone resin, a polyether imide resin, a transparent polyimide resin, a polycarbonate resin, a cyclic olefin based resin such as a cyclic olefin homopolymer or a cyclic olefin co-polymer, and the like, can be cited.

Among these, from the points of view of being transparent, and, either the melting point being 220°C or higher or the glass transition temperature (Tg) being 200°C or higher, it is desirable to use for the base film a film comprising a resin such as a polyether imide resin (Tg: 234°C; melting point: 275°C), a polyphenylene sulfide resin (Tg: 223°C; melting point: 280°C), a polyether sulfone resin (Tg: 225°C), a polyethylene naphthalate resin (Tg: 155°C; melting point: 270°C) or a transparent polyimide resin (Tg: 250°C or higher).

A film containing one species or two or more species of those resins in combination can be used.

As the transparent polyimide resin, in addition to those with a hexafluoroisopropylidene bond introduced in the main chain of the polyimide resin and fluorinated polyimides, in which a hydrogen in the polyimide has been substituted with a fluorine, alicyclic polyimides, in which the cyclic unsaturated organic compound contained in the structure of the polyimide resin has been hydrogenated, and the like, can be cited. For instance, those described in Japanese Patent Application Laid-open No. S61-141738, Japanese Patent Application Laid-open No. 2000-292635, and the like can also be used.

(Heat-setting treatment)

By having a predetermined cured layer provided on both the front and the back sides of the base film, the present laminated film allows a transparent laminated film with excellent transparency and heat dimensional stability at high temperatures (for instance, 200°C or higher) to be obtained, without having to carry out a heat-setting treatment on the base film. However, it is also possible to use the base film whereon a heat-setting treatment has been carried out in order to alleviate shrinkage.

The dimensional stability of the base film and the present laminated film can be improved further by performing beforehand a heat-setting treatment on the base film, prior to coating the curable resin composition over the base film.

Among these, a biaxially stretched polyester film whereon a heat-setting treatment has been carried out in order to alleviate shrinkage is a preferred example as a base film.

It is desirable for the heat-setting treatment of the base film that the base film is treated by heating, when the glass transition temperature of the base film is Tg, at a temperature of Tg to Tg + 100°C for 0.1 to 180 minutes.

Concrete techniques for heat-setting treatment of the base film are not limited in particular if they are methods that can maintain the required temperature and duration. For instance, the method of storing in an oven or a constant temperature chamber that is set to the required temperature, the method of blowing hot air, the method of heating with an infrared heater, the method of irradiating light with a lamp, the method of applying heat directly by contacting with a hot roll or a hot plate, the method of irradiating microwave, and the like can, be used. In addition, the base film may be cut to a size that facilitates handling and treated by heating, or may still be a film roll and treated by heating. In addition, as long as the required duration and temperature can be obtained, heating can be carried out in the fabrication process by incorporating a heating apparatus in one portion of a film fabrication apparatus such as a coater or a slitter.

(Thickness of the base film)

For the thickness of the base film, 1 $\mu$m to 200 $\mu$m is desirable, and 5 $\mu$m or greater or 100 $\mu$m or less is further desirable. Being in such ranges allow advantages such as improvement of light transmittance and high handling capability to be obtained.

<Physical properties of the present laminated film>

Next, various physical properties that the present laminated film can be provided with will be described.

(Total light transmittance)

For the present laminated film, it is desirable that the total light transmittance is 80% or greater, and 85% or greater is further desirable. With the present laminated film having a total light transmittance in such ranges, attenuation of light can be suppressed in lightings, displays and the like, which become brighter. In addition, as a solar battery member, advantage such as more light is incorporated can be obtained.

(Storage elastic modulus (E'))

The present laminated film has the characteristic that the storage elastic modulus (E') in at least one direction, for instance the longitudinal direction (MD direction), at 200°C temperature from dynamic viscoelasticity measurement is larger than the storage elastic modulus (E') in at least one direction, for instance the longitudinal direction, of the base film in the same conditions.

Among these, it is desirable that the storage elastic modulus (E') in at least one direction, for instance the longitudinal direction, of the laminated film at 200°C temperature from dynamic viscoelasticity measurement exceeds 1.0 times the storage elastic modulus (E') in at least one direction, for instance the longitudinal direction, of the base film in the same conditions, and 1.1 times is more desirable. Within such ranges, when a treatment by heating at high temperature is performed on the film, the morphology as a film can be maintained without shrinking, against the shrinkage stress of the base material.

In addition, it is desirable for the present laminated film that the storage elastic modulus (E') in at least one direction, for instance the longitudinal direction, at 200°C temperature from dynamic viscoelasticity measurement is 1 GPa or greater. Within such a range, dimensional stability while at high temperatures is high, leading to no problems in terms of practical characteristics, which is thus desirable. From the point of view of post-processing suitability, the upper limit value of the storage elastic modulus (E') value is preferably 100 GPa or lower.

(Percentage shrinkage by heating)

It is desirable for the present laminated film that the percentage shrinkages in the longitudinal direction (MD direction) and the transversal direction (TD direction) when heated at 220°C for 10 minutes are both less than 1.0%, as measured according to JIS-C23307.4.6.1 (Percentage Change of Dimension by Shrinkage: Method A). By having such range of percentage shrinkage, the present laminated film has the advantage that dimensional-offset when forming a circuit or an element is lessened, and in addition, when laminating an inorganic barrier layer, a higher barrier property is obtained.

In addition, it is desirable that the percentage shrinkages in the longitudinal direction and the transversal direction of the present laminated film at 250°C measured in the same conditions are both less than 0.5%, and in particular less than 0.1% is desirable. Having such ranges of percentage shrinkage allows the advantages mentioned above to be improved further.

<Production method for the present laminated film>

The present laminated film can be produced by coating and curing a curable resin composition or the like to form cured layers on both the front and the back sides of the base film.

As methods for coating a curable resin composition, or the like, methods in which the above-mentioned curable resin composition is coated on the base film, for instance, by bar coater coating, Meyer bar coating, air knife coating, gravure coating, reverse gravure coating, offset printing, flexography, screen printing, dip coat or the like, can be cited. In addition, methods whereby a cured layer is molded over glass or a polyester film and then the molded cured layer is transferred onto the base film are also valid.

As methods for coating a curable resin composition on a base film and then curing (crosslinking) the curable resin composition in the above manner, such methods as heat curing, UV curing and electron beam curing can be used alone or in combination. Among these, methods via UV curing are desirable due to the curing being achievable in a short time and relatively readily.

When curing by UV, a UV irradiation apparatus having a xenon lamp, a high-pressure mercury lamp or a metal halide lamp is used as a light source, and the amount of light, the placement of the light source, and the like, are adjusted as necessary.

In addition, when a high-pressure mercury lamp is used, curing at 5 to 60 m/minute transport speed with respect to one lamp having an amount of light of 80 to 160 W/cm is desirable.

Meanwhile, when curing by an electron beam, the use of an electron beam accelerator having an energy of 100 to 500 eV is desirable.

<Applications>

The present laminated film has the advantage that, as described above, while transparency is maintained, there is little dimensional change (heat dimensional stability) from treatment by heating, and thus can be used suitably, for instance, as a photoelectric element substrate, or the like, in addition to substrates for display materials such as liquid crystal displays, organic light-emitting displays (OLEDs), electrophoretic displays (electronic papers), touch panels, color filters and back lights, and substrates for solar batteries.

In addition, the present laminated film can be used as base material for gas barrier film; gas barrier fabrication can be performed thereon for use as a barrier film (referred to "the present barrier film").

In prior art, when a polyester film is used as a film for gas barrier processing, there are such problems as, due to cracks being introduced or wrinkles occurring in the gas barrier layer, functions that include gas-barrier properties cannot be exerted sufficiently. In contrast, the present barrier film is excellent on the point that there are no such problems.

The present barrier film is used suitably in applications requiring gas-barrier property such as, organic semiconductor devices such as organic EL, liquid crystal display elements and solar batteries.

The gas barrier fabrication is a fabrication method whereby a gas barrier layer comprising a material with high gas-barrier property such as, an inorganic substance such as metal oxide, or an organic compound, is formed on at least one side of the present laminated film.

In so doing, as materials with high gas-barrier property, for instance, silicon, aluminum, magnesium, zinc, tin, nickel, titanium, or oxides, carbides, nitrides, oxycarbides, oxynitrides and oxycarbonitrides thereof, diamond-like carbon or mixtures thereof, and the like, maybe given, from the point that there is no risk of a current leaking when used in a solar battery or the like, inorganic oxides such as silicon oxide, silicon oxycarbide, silicon oxynitride, silicon oxycarbonitride, aluminum oxide, aluminum oxycarbide and aluminum oxynitride, nitrides such as silicon nitride and aluminum nitride, and diamond-like carbon, as well as mixtures thereof, are desirable. In particular, silicon oxide, silicon oxycarbide, silicon oxynitride, silicon oxycarbonitride, silicon nitride, aluminum oxide, aluminum oxycarbide, aluminum oxynitride, aluminum nitride and mixtures thereof are desirable on the point that high gas-barrier property can be maintained stably.

As techniques for forming a gas barrier layer in the present laminated film using the above materials, any methods such as vapor deposition method and coating method can be adopted. From the point that a uniform thin film with high gas-barrier property can be obtained, the vapor deposition method is desirable.

This vapor deposition method includes a method such as physical vapor deposition (PVD), or chemical vapor deposition (CVD). As physical vapor deposition methods, vacuum deposition, ion plating, sputtering, and the like, may be cited. As chemical vapor deposition methods, plasma CVD, which uses plasma, catalytic chemical vapor deposition (Cat-CVD), which uses a heat catalyzer to catalytically pyrolyse a material gas, and the like, may be cited.

From the point of exerting a stable gas-barrier property and transparency, the thickness of the gas barrier layer is preferably 10 to 1,000 nm, 40 to 800 nm being more desirable, and 50 to 600 nm being further desirable.

In addition, the gas barrier layer may be a single layer or a multilayer. When the gas barrier layer is a multilayer, each layer may comprise the same material, or may comprise different materials.

The moisture vapor transmission rate of the present barrier film at temperature of 40°C and a relative humidity of 90% is preferably less than 0.1 [g/(m$^2$·day)], more preferably 0.06 [g/(m$^2$·day)] or lower, and further preferably 0.03 [g/(m$^2$·day)] or lower.

The method for the measurement of the moisture vapor transmission rate follows the various conditions of JIS Z0222 "Method of Permeability Test for Moisture-Proof Packing Case" and JIS Z0208 "Testing Methods for Determination of the moisture vapor transmission rate of Moisture-Proof Packaging Materials (dish method)". In particular, the moisture vapor transmission rate is measured by the methods described in the examples.

<More concrete exemplary embodiments>

Hereafter, examples of the preferred concrete embodiment of the present invention will be described further. However, the present invention is not limited to these embodiments.

(First embodiment)

The transparent laminated film according to a first embodiment is a transparent laminated film provided with a constitution in which a cured layer is laminated on both the front and the back sides of the base film, the cured layer being a layer that has been formed by coating and curing a composition containing a curable resin composition and microparticles with a median diameter of 200 nm or less (referred to as a "coat layer"), and the transparent laminated film having the following properties (a) and (b):

(a) the percentage shrinkages in the longitudinal direction and the transversal direction when heated at 220°C for 10 minutes are less than 1% as measured according to JIS-C23307.4.6.1 (Percentage Change of Dimension by Shrinkage: Method A)
(b) the total light transmittance is 80% or greater

The transparent laminated film according to the first embodiment is a transparent laminated film provided with extremely excellent transparency and high dimensional stability while at high temperatures.

In prior art, in order to elevate the dimensional stability of the base film, attempts have been made, to intend to improve the dimensional changes from shrinkage during heating by including inorganic microparticles in the base film. However, if the base film is filled with inorganic microparticles at a high density, there are problems such as the base film becomes brittle, and, depending on the inorganic microparticle used, the transparency of the base film is reduced.

In contrast by forming a cured layer (coat layer) containing a curable resin composition and microparticles with a median diameter of 200 nm or less in the base film, as in the first embodiment, transparency and dimensional stability against shrinkage during heating can be improved, without giving rise to such problems.

In the first embodiment, various preferred modes such as constitutive materials and mixing amounts for the base film, the curable resin composition and the microparticle, are the same as those described above.

(Second embodiment)

The transparent laminated film according to a second embodiment is a transparent laminated film provided with a constitution in which a cured layer is laminated on both the front and the back sides of the base film, the cured layers being laminated in such a manner that the thickness sum of the cured layers of both the front and the back sides is 150% or more but 400% or less of the thickness of the base film, and the transparent laminated film having the following properties (c) and (d):

(c) in each temperature region among 0 to 50°C, 50 to 100°C, 100 to 150°C and 150 to 200°C, the mean value of the linear expansion coefficients in the longitudinal direction (MD direction) and the transversal direction (TD direction) is -30 ppm/°C or higher but 30 ppm/°C or lower
(d) the total light transmittance is 80% or greater

For the transparent laminated film according to the second embodiment, owing to the sum of the thicknesses of the cured layers on both the front and the back sides of the base film being 150% or more but 400% or less of the thickness of the base film, the cured layer exerts low shrinkability with respect to the shrinkage stress of the base film due to heating, the cured layer exerts low expansibility with respect to the expansion stress of the base film due to heating. Not only this, since the thickness of the entirety of the cured layers is sufficiently large with respect to the thickness of the base film, the dimensional change of the entirety of the film is extremely small.

As a result, compared to biaxially stretched polyester films such as polyethylene terephthalate and base film such as transparent polyimide resin that have been used in prior art, the transparent laminated film according to the second embodiment can be turned into a film having low linear expansibility, without giving rise to such problems as shrinkage and expansion of the film.

The linear expansion coefficients of (c) above can be adjusted to the desired ranges mainly by altering stretching conditions such as stretching temperature and draw ratio and heat-treatment conditions such as heat-treatment temperature and heat-treatment time. However, if dimensional change by heat is reduced by this technique alone, the heat-treatment time becomes enormous, which is not desirable from the aspect of production costs. Thus, in the second embodiment, a predetermined cured layer is arranged on both the front and the back sides of the base film, thereby enabling with the thermostability and the elastic modulus of the cured layers a reduction of the dimensional changes due to shrinkage or expansion occurring caused by the base film during heating.

It is desirable for the transparent laminated film according to the second embodiment that the mean value of the linear expansion coefficients in the longitudinal direction (MD direction) and the transversal direction (TD direction) in temperature region of 200 to 220°C temperature is -60 ppm/°C or higher and 60 ppm/°C or lower. If the mean value of the linear expansion coefficients is within this range, with little dimensionally changed portion when the transparent laminated film is placed under high temperature environment, there is no such problems as a warpage occurring, which is thus desirable.

For instance, when the transparent laminated film according to the second embodiment is used as a film for gas barrier fabrication use, the destruction of the gas barrier layer due to dimensional change by heat is alleviated. In addition, when the transparent laminated film is used as a film for flexible display substrate use, such problems as warpage and disconnection of wiring can be remedied.

The linear expansion coefficients of the transparent laminated film can be measured by any of the following methods:

i) Measurement is possible by the thermomechanical analysis (TMA method) using a thermal stress and strain measurement device (manufactured by Seiko Instruments Inc., TMA/SS6100). In so doing, the linear expansion coefficient can be determined from the dimensional change of a test piece measured when heating from room temperature (25°C) to 250°C at 3°C/minute temperature increase rate, with 45 mm test piece width, 15 mm inter-chuck distance and 0.1 g load.

ii) Measurement is possible using a thermomechanical analyzer (manufactured by Seiko Instruments Inc., TMA-120). The linear expansion coefficient can be determined as the proportion of the amount of dimensional change of the test piece [(dimensional change between 150°C and 200°C/dimension value at 150°C)/amount of temperature change] $\times 10^6$ (ppm/°C) measured from 150°C to 200°C when heating from 25°C to 250°C at 2°C/minute temperature increase rate with 3 mm test piece width, 10 mm inter-chuck distance and 0.1 mN load for the measurement conditions.

Similarly to the first embodiment, in the second embodiment, various preferred modes such as constitutive materials and mixing amounts for the base film, the curable resin composition and the microparticle, are the same as those described above.

(Third embodiment)

The transparent laminated film according to a third embodiment is a transparent laminated film provided with a constitution in which a cured layer is laminated on both the front and the back sides of the base film, the transparent laminated film comprising a constitution provided with a cured layer and a base film having the relationships (d) and (e) below, and having as an entire film the following property (f):

(d) For the cured layer, at temperatures that are 20°C lower than the glass transition temperature of the base film, or below, the storage elastic modulus (E') a is smaller than the storage elastic modulus of the base film under the same conditions.

(e) For the cured layer, at temperatures that are 20°C higher than the glass transition temperature of the base film, or above, the storage elastic modulus (E') b is greater than the storage elastic modulus of the base film under the same conditions.

(f) The percentage shrinkages in the longitudinal direction and the transversal direction when the film heated at 220°C for 10 minutes are less than 1 % as measured according to JIS-C23307.4.6.1 (Percentage Change of Dimension by Shrinkage: Method A).

In the case of the base film alone, there is the problem that, if a treatment of exposure to a high temperature is conducted, a shrinkage occurs in the base film due to the stress conferred at molding and a force whereby a site that has been stretched by a stretching process attempts to contract.

In contrast, for the transparent laminated film according to the third embodiment, since the constitution comprises cured layers having specific properties laminated on the base film, in a high-temperature region where the base film shrinks, the cured layer counteracts the shrinkage stress of the base film and alleviates the shrinkage, thereby allowing the dimensional stability against shrinkage during treatment by heating to be improved.

Next, a transparent laminated film according to the third embodiment provided with cured layers that satisfy the conditions (d) and (e) above will be described concretely with, as an example, a film in which cured layers comprising a transparent polyimide resin (concretely, an alicyclic polyimide resin with no cyclic unsaturated organic compound contained in the polyimide resin) are laminated on a biaxially stretched base film comprising a polyethylene naphthalate resin.

Regarding the storage elastic modulus of the film in (d) and (e) above, (E') is a value obtained by measuring for the longitudinal direction, which is the longer direction of the film, and the transversal direction, which is orthogonal to this direction, the viscoelasticity behavior from 0°C to 220°C at 10 Hz oscillation frequency, 0.1% distortion and 3°C/minute temperature increase rate, by the dynamic viscoelasticity measurement method described in JIS K-7198 method A, using a dynamic viscoelasticity measurement device "DVA-500" manufactured by IT Keisoku Seigyo K.K.

In addition, the glass transition temperature in (d) and (e) above is a value calculated from the peak value of $\tan \delta$ represented by the ratio (E'/E") between the storage elastic modulus (E') and the loss elastic modulus (E") measured with the same device in the same conditions.

Fig. 1 is a figure showing, regarding the transparent laminated film according to the third embodiment, the variation in storage elastic modulus (E') and the dimensional change due to thermomechanical property test (TMA) in each layer.

As shown in this Fig. 1, the biaxially stretched polyethylene naphthalate film (base film) can be observed to have a sufficiently high storage elastic modulus (E') at temperatures that are at least 20°C or more lower than the glass transition temperature (155°C), or below (for instance, 7.3 GPa at 25°C). Meanwhile, the storage elastic modulus (E') can be observed to decrease at temperatures that are at least 20°C higher than the glass transition temperature, or above; and also from the results of thermomechanical property test (TMA), the dimensional stability can be observed to be low at this temperature. In addition, at the temperatures that are at least 20°C higher than the glass transition temperature, or above, the storage elastic modulus (E') can be observed to decrease; and also from the results of TMA, shrinkage can be observed to occur.

In contrast, the cured layers (transparent polyimide resin layers) of the transparent laminated film according to the third embodiment, with the storage elastic modulus (E') being low compared to the base film at temperatures that are at least 20°C or more lower than the glass transition temperature of the base film, or below, while the storage elastic modulus (E') being high compared to the base film at temperatures that are at least 20°C higher than the glass transition temperature of the base film, or above, can be observed to expand from the results of TMA as well.

In this way, regarding the transparent laminated film according to the third embodiment, the base film and the cured layer have storage elastic moduli of opposing behaviors whereby the dimensional stability of the base film becomes predominant in the low-temperature region (from room temperature to below the glass transition temperature of the base film) and the cured layers expand to a suitable degree to quench the shrinkage of the base film in the high-temperature region (at the glass transition temperature of the base film or higher), thus allowing a film with high dimensional stability in a broad range from room temperature to while at high temperatures can be obtained.

Similarly to the first and the second embodiments, regarding the third embodiment as well, various preferred modes such as constitutive materials and mixing amounts for the base film, the curable resin composition and the microparticle, are the same as those described above.

(Fourth embodiment)

The transparent laminated film according to a fourth embodiment is a transparent laminated film provided with a constitution in which a cured layer is laminated on both the front and the back sides of the base film, the base film being a biaxially stretched polyester film, the cured layers containing a photocurable resin composition and being laminated on the base film in such a way that the thickness sum of the cured layers is 10 to 150% with respect to the base film, and the transparent laminated film having the properties (g) and (h) below:

(g) the storage elastic modulus (E') from each of the dynamic viscoelasticity measurements in the longitudinal direction and the transversal direction of the laminated film at 200°C is 0.35 GPa or greater

(h) each of the linear expansion coefficients in the longitudinal direction and the transversal direction is -85 to 85 ppm/°C in a range of 150 to 200°C

In the fourth embodiment, there is no particular limitation for the raw materials for the biaxially stretched polyester film to be used. Concretely, various polyester resins such as polyethylene terephthalate and polyethylene naphthalate can be cited. Among the above, using polyethylene naphthalate is desirable from the aspect of resistance to heat. The thickness of the biaxially stretched polyester film is different depending on the application. For instance, 10 $\mu$m to 50 $\mu$m is desirable, more preferably 10 $\mu$m or greater or 38 $\mu$m or less, in particular 10 $\mu$m or greater or 30 $\mu$m or less, and further preferably 12 $\mu$m or greater or 25 $\mu$m or less.

In the fourth embodiment, it is desirable for the biaxially stretched polyester film that the linear expansion coefficient is -60 ppm/°C to 60 ppm/°C in the range of 50 to 100°C. Using a base film having such dimensional stability facilitates providing heat dimensional stability up to a high temperature region. While the dimensional stability is preferably -60 ppm/°C to 60 ppm/°C in the range of 50 to 150°C, since improving the heat dimensional stability of the biaxially stretched polyester film up to such temperature range is accompanied by an increase in production costs, in general, the dimensional stability is -60 ppm/°C to 60 ppm/°C in the range of 50 to 100°C. The linear expansion coefficient in the fourth embodiment is a value calculated from the values of dimensional change in a predetermined temperature range when [a sample is] immobilized with a 0.1 mN tensile load and the temperature is raised from room temperature at a rate of 2°C/minute using a thermomechanical analyzer.

In the fourth embodiment, it is desirable that the biaxially stretched polyester film is one that underwent a heat-setting treatment for the purpose of alleviating shrinkage.

In so doing, one that has been treated at temperature of Tg to Tg + 100°C for 0.1 to 180 minutes, when the glass transition temperature of the biaxially stretched polyester film is Tg, for the heat-setting treatment, is desirable.

For the transparent laminated film of the fourth embodiment, each of the linear expansion coefficients in the longitudinal direction (MD direction) and the transversal direction (TD direction) of the laminated film is -85 to 85 ppm/°C in the range of 150 to 200°C, preferably -70 to 70 ppm/°C, particularly preferably -65 to 65 ppm/°C, more preferably -50 to 50 ppm/°C, more preferably -40 to 40 ppm/°C and further preferably -20 to 20 ppm/°C. Being within such ranges is desirable since there is little dimensional change in a transparent laminated film when placed under high temperature environment, posing no problem in terms of practical properties. For instance, when used as a film for gas barrier fabrication use, the destruction of the gas barrier layer due to dimensional change by heat is alleviated, and when used as a film for flexible display substrate use, problems such as warpage and disconnection of wiring can be improved.

In the fourth embodiment, by arranging against a base film with a low linear expansion coefficient while at low temperatures a structure that maintains an equivalent strength also while at high temperatures so as to provide such a heat dimensional stability, a sufficient dimensional stability is retained while at high temperatures as well.

That is to say, having a high elastic modulus that can maintain the dimensions sufficiently against the stress from the film attempting to expand and shrink while at high temperatures allows the dimensional change to be reduced significantly. As processing methods for improving the heat dimensional stability of a polyester film in general, mainly altering stretching conditions such as stretching temperature and draw ratio, heat-treatment conditions such as heat-treatment temperature and heat-treatment time, and the like, can be cited; however, in order to reduce the dimensional change by heat near 200°C with this technique alone, the heat-treatment time becomes enormous, which is thus not desirable from the aspect of production costs.

Therefore, in the fourth embodiment, a cured layer of photocurable resin composition is arranged on both the front and the back sides of the film, thereby retaining the elastic modulus of the film while at high temperatures, allowing the dimensional change by heat to be reduced.

For the storage elastic modulus (E') value in each of the dynamic viscoelasticity measurements in the longitudinal direction and the transversal direction of the transparent laminated film in the fourth embodiment, 0.35 GPa or greater at 200°C is desirable, more preferably 0.45 GPa or greater, further preferably 0.6 GPa or greater and particularly preferably 0.7 GPa or greater. Coating a predetermined photocurable resin composition so as to have such a physical property allows a film with excellent dimensional stability at high temperatures to be obtained. While there is no particular limitation regarding the upper limit value of the storage elastic modulus (E') value, from the point of view of post-processing suitability, it is desirable that this value is 10 GPa or lower.

The storage elastic modulus (E') value of the transparent laminated film in the fourth embodiment may be adjusted by methods such as lamination, addition and filling of a material having a high elastic modulus.

In addition, from the point of view of occurrence of warpage under high-temperature environment, it is desirable that the linear expansion coefficient and the storage elastic modulus (E') of such a transparent laminated film both in the longitudinal direction and the transversal direction are within the ranges mentioned earlier.

In the fourth embodiment, using microparticles as a filler in the cured layer is desirable for the purpose of improving the elastic modulus, and inorganic microparticles are particularly desirable as the resistance to heat is high.

In addition, if the particle size of the microparticle is too small, aggregation of particles against one another is provoked, and if too large, the particle peels off and drops from the cured film, thus, in general, 1 to 1,000 nm is desirable for the median diameter, and more preferably 10 nm or greater or 500 nm or less. For these particles, when the entire amount of solid contents in the photocurable resin composition is 100 parts by mass, it is desirable to include in the composition 20 to 80 parts by mass of inorganic microparticles with a median diameter of 1 nm to 1,000 nm. If the content is too small, there is a small contribution to elastic modulus improvement, and if too large, there is a risk of peeling-off from the cured film.

The cured layer of the photocurable resin composition is arranged at a thickness of 10 to 150% in total with respect to the thickness of the biaxially stretched polyester film, which is the base material. If thinner than the thickness in this range, the storage elastic modulus of the laminated film while at high temperatures cannot be retained and the heat dimensional stability becomes insufficient as a result. In addition, if the thickness of the cured layer exceeds this range, the laminated film becomes prone to fractures.

From the above points of view, 25% or more or 150% or less in total with respect to the thickness of the biaxially stretched polyester film is more desirable for the thickness of the cured layer, of which 30% or more or 120% is further desirable, among which 40% or more or 110% or less is further desirable. However, there is no limitation to this if inorganic microparticles are contained in the photocurable resin composition, and it is possible to have heat dimensional stability sufficiently even with a range of on the order of 10 to 100%.

The transparent laminated film of the fourth embodiment has a cured layer of photocurable resin composition on both the front and the back sides of the biaxially stretched polyester film, which is the base film. If it has the cured layer on one side only, curling occurs, which is thus not desirable in terms of practical use. Having a cured layer on both the front and the back sides allows the occurrence of curling to be suppressed.

While the cured layers disposed on both the front and the back sides have no particular limitation regarding each of the thicknesses, from the point of view of giving the same elastic modulus to both the front and the back sides to reduce curling, it is desirable that the thickness ratio thereof, defined as the thickness ratio between one cured layer and the other cured layer (thickness of one cured layer/thickness of the other cured layer), is 0.5 to 1.5, and 0.75 or greater or 1.25 or less is more desirable.

It is desirable that the photocurable resin composition contains a photocurable resin having a fluorene backbone.

It is desirable that the photocurable resin composition is one that is cured substantially with an accumulated UV amount of 10 to 1,000 mJ/cm$^2$. Here, "substantially" means being cured to an extent that the cured layer does not stick to other surfaces when winding the film. If the accumulated UV amount is within such a range, the influence of heat on the base material can be ignored, in addition, the occurrence of heat wrinkles in the film can be prevented. In addition, the efficiency is satisfactory from the aspect of production speed, which is desirable.

It is desirable for the transparent laminated film of the fourth embodiment that, after heating at 200°C temperature for 10 minutes, the percentage shrinkages in the longitudinal direction and the transversal direction measured at room temperature (25°C) are less than 1.0% as measured according to JIS-C23307.4.6.1 (Percentage Change of Dimension by Shrinkage: Method A).

Such a transparent laminated film of the fourth embodiment can be used in applications requiring dimensional stability at high temperatures, in particular, films for packaging use and films for electronic parts use, in addition, by carrying out gas barrier fabrication, can be used suitably in semiconductor devices such as organic EL, liquid crystal display elements and solar battery applications.

Similarly to the first to third embodiments, regarding the fourth embodiment as well, various preferred modes such as constitutive materials and mixing amounts for the base film, the curable resin composition and the microparticle, are the same as those described above.

<Explanation of the terms>

Herein, the expression "X to Y" (X and Y are any number), unless expressly stated otherwise includes the meaning "X or greater but Y or lower" at the same time as the meaning "preferably larger than X" or "preferably smaller than Y".

In addition, the expression "X or greater" (X is any number) or "Y or lower" (Y is any number) include the meaning to the effect of "larger than X is desirable" or "less than Y is desirable".

[Examples]

Hereafter, the present invention will be described in further details with examples and Comparative Examples; however, the present invention is not to be limited in any way by these examples, and the like.

[Example 1]

(Preparation of curable resin composition)

Homogeneously mixed were 14.4 parts by mass of a photocurable bifunctional acrylate monomers/oligomers having a tricyclodecane structure, which is a rigid backbone (manufactured by Shin-Nakamura Chemical Co., Ltd.; product name: "A-DCP"; refractive index: 1.50), 51.1 parts by mass of transparent microparticle A (manufactured by Admatechs Co., Ltd.; product name: "YA010C-SM1", colloidal silica), 0.44 parts by mass of a photocuring agent (manufactured by BASF; 1-hydroxy cyclohexyl-phenyl ketone), and, 34.1 parts by mass of solvent (manufactured by Arakawa Chemical Industries, Ltd.; methyl ethyl ketone) to obtain a curable resin composition for cured layer formation use (hereafter referred to as "coat A").

The proportion by volume of colloidal silica in the cured layer was 63.4% by volume.

In addition, the median diameter for the above microparticle mixture was 10 nm and the standard deviation of the particle size was 40.3%.

(Preparation of transparent laminated film 1)

The coat A prepared above was applied on one side of a 12 $\mu$m-thick biaxially stretched film (manufactured by Teijin Limited; product name: "TEONEX Q51"; polyethylene naphthalate film hereafter referred to as "film A") using a wire bar coater in such a manner that the thickness after curing was 5 $\mu$m, then, the solvent was dried and eliminated by introduction inside an oven set to 100°C for 10 minutes, the extremity of the film in an immobilized state was introduced into a belt conveyor apparatus and a high-pressure mercury lamp (160 W/cm) was shone on the coated side to obtain a film having a photocurable cured layer on one side.

By applying the coat A and carrying out curing similarly to above on the side of the film where this cured layer was not formed, a transparent laminated film 1 with a cured layer formed on both sides was obtained.

The properties of the obtained transparent layer film 1 were evaluated according to the measurement methods described below.

[Example 2]

(Preparation of transparent laminated film 2)

By a similar procedure to Example 1, the coat A was applied on both sides of the film A using a wire bar coater in such a manner that the thickness after curing was 10 $\mu$m and cured to obtain a transparent laminated film 2 with a cured layer formed on both sides. The properties of the obtained transparent layer film 2 were evaluated according to the measurement methods described below.

[Example 3]

(Preparation of transparent laminated film 3)

By a similar procedure to Example 1, the coat A was applied on both sides of a 7 $\mu$m-thick base film (manufactured by Mitsubishi Plastics Inc.; product name: "SUPERIO UT-F film"; polyether imide film, hereafter referred to as "film B") using a wire bar coater in such a manner that the thickness after curing was 5 $\mu$m and cured to obtain a transparent laminated film 3 with a cured layer formed on both sides.

The properties of the obtained transparent layer film 3 were evaluated according to the measurement methods described below.

[Example 4]

(Preparation of transparent laminated film 4)

By a similar procedure to Example 3, the coat A was applied on both sides of the film B using a wire bar coater in such a manner that the thickness after curing was 10 $\mu$m and cured to obtain a transparent laminated film 4 with a cured layer formed on both sides was obtained.

The properties of the obtained transparent layer film 4 were evaluated according to the measurement methods described below.

[Example 5]

(Preparation of coat layer)

Homogeneously mixed were 97 parts by mass of a photocurable bifunctional acrylate monomers/oligomers having a tricyclodecane structure, which is a rigid backbone (manufactured by Shin-Nakamura Chemical Co., Ltd.; product name: "A-DCP"; refractive index: 1.50) and 3 parts by mass of a photocuring agent (manufactured by BASF; 1-hydroxy cyclohexyl-phenyl ketone) to obtain a curable resin composition for cured layer formation use containing no transparent microparticle (hereafter referred to as "coat B").

(Preparation of transparent laminated film 5)

On one side of film B, the coat B prepared above was applied using a wire bar coater in such a manner that the thickness after curing was 5 μm, then, the solvent was dried and eliminated by introduction inside an oven set to 120°C for 10 minutes, the extremity of the film in an immobilized state was introduced into a belt conveyor apparatus and a high-pressure mercury lamp (160 W/cm) was shone on the coated side to obtain a film having a photocurable cured layer on one side.

By applying the coat B and carrying out curing similarly to above on the side of the film where this cured layer was not formed, a transparent laminated film 5 with a cured layer formed on both sides was obtained.

The properties of the obtained transparent layer film 5 were evaluated according to the measurement methods described below.

[Comparative Example 1]

The film A having no cured layer was evaluated similarly to Example 1.

[Comparative Example 2]

The film B having no cured layer was evaluated similarly to Example 1.

[Comparative Example 3]

On one side of the film A, an acrylic resin (manufactured by Dai-ichi Kogyo Seiyaku Co., Ltd.; product name: "GX-8801A"; a photocurable urethane acrylate oligomer) was applied using a wire bar coater in such a manner that the thickness after curing was 3 μm, then, the extremity of the film in an immobilized state was introduced into a belt conveyor apparatus and a high-pressure mercury lamp (160 W/cm) was shone on the coated side to obtain a film having a photocurable cured layer on one side.

By applying the acrylic resin and carrying out curing similarly to above on the side of the film where this cured layer was not formed, a laminated film with a cured layer formed on both sides was obtained.

The obtained laminated film was evaluated similarly to Example 1.

[Comparative Example 4]

(Preparation of curable resin composition)

Homogeneously mixed were 14.4 parts by mass of a photocurable bifunctional acrylate monomers/oligomers having a tricyclodecane structure, which is a rigid backbone (manufactured by Shin-Nakamura Chemical Co., Ltd.; product name: "A-DCP"; refractive index: 1.50), 25.5 parts by mass of a transparent microparticle A (manufactured by Admatechs Co., Ltd.; product name: "YA010C-SM1", colloidal silica), 25.5 parts by mass of a transparent microparticle B (manufactured by Admatechs Co., Ltd.; product name: "SO-C2", colloidal silica), 0.44 parts by mass of a photocuring agent (manufactured by BASF; 1-hydroxycyclohexyl-phenyl ketone), and 34.1 parts by mass of a solvent (manufactured by Arakawa Chemical Industries, Ltd.; methyl ethyl ketone) to obtain a curable resin composition for cured layer formation use (hereafter referred to as "coat C").

The proportion by volume of the colloidal silica in the cured layer was 63.4% by volume.

The median diameter of the microparticle mixture was 255.2 nm and the standard deviation of the particle size was 72.9%.

(Preparation of the laminated film)

By a similar procedure to Example 1, the coat C was applied, dried and cured on both sides of the film A to obtain a transparent laminated film with a cured layer formed on both sides.

Regarding the obtained laminated film, the percentage shrinkage and the total light transmittance were measured according to the measurement methods described below.

[Comparative Example 5]

(Preparation of curable resin composition)

Homogeneously mixed were 11.6 parts by mass of a photocurable bifunctional acrylate monomers/oligomers having a tricyclodecane structure, which is a rigid backbone (manufactured by Shin-Nakamura Chemical Co., Ltd.; product name: "A-DCP"; refractive index: 1.50), 52.8 parts by mass of a transparent microparticle C (manufactured by Topy Industries, Ltd.; product name "PDM-5B", scale-shaped mica), 0.36 parts by mass of a photocuring agent (manufactured by BASF; 1-hydroxy cyclohexyl-phenyl ketone) and 34.1 parts by mass of a solvent (manufactured by Arakawa Chemical Industries, Ltd.; methyl ethyl ketone) to obtain a curable resin composition for cured layer formation use (hereafter referred to as "coat D") was obtained.

The proportion by volume of the transparent microparticle in the cured layer was 63.4% by volume.

The shape of the microparticle C was scale-like, short axis was 7 nm and long axis was 8,000 nm for the microparticle C, the median diameter (arithmetic mean value) of the microparticle C was 403 nm.

By a similar procedure to Example 1, the coat D was applied on both sides of the film A; however, the coating film whitened, fractured and peeled-off, simultaneously to drying of the coating film. It is thought that the coating film embrittled due to the steric interactions between the particles being too large and whitened due to the flat surface reflecting the light. The total light transmittance was measured according to the measurement methods described below.

<Property evaluation and measurement conditions 1>

For the films prepared in the Examples 1 to 5 and the Comparative Examples 1 to 3, the storage elastic modulus (E'), the total light transmittance and the percentage shrinkage were measured according to the methods described below. The respective results are shown in Table 1.

In addition, the median diameter and the relative standard deviation were measured also for the microparticles used, according to the methods described below. The respective results are shown in Table 1.

For the film prepared in Comparative Example 4, the percentage shrinkage, the median diameter, the relative standard deviation and the total light transmittance were measured according to the methods described below. The respective results are shown in Table 1.

For Comparative Example 5, as preparation of the film was difficult, only the median diameter, the relative standard deviation and the total light transmittance were measured.

(Measurement method for storage elastic modulus (E'))

The storage elastic modulus (E') of the film at 200°C temperature was determined from the data obtained by measuring for the longitudinal direction (MD direction), which is the longer direction of the film, the viscoelasticity behavior from 25°C to 250°C at 10 Hz oscillation frequency, 0.1% distortion and 3°C/minute temperature increase rate, by the dynamic viscoelasticity measurement method described in JIS K-7198 method A, using a dynamic viscoelasticity measurement device "DVA-200" manufactured by IT Keisoku Seigyo K.K.

(Measurement method for percentage shrinkage)

The percentage shrinkage of the film was determined according to JIS C23307.4.6.1 (Percentage Change of Dimension by Shrinkage: Method A), by changing the temperature of a thermostatic chamber from 120°C to 200°C or 220°C, respectively, and measuring the percentage change between before and after heating of the dimension of a strip marked with reference lines. The percentage shrinkage was measured for both the longitudinal direction (MD direction), which is the longer direction of the film, and the transversal direction (TD direction), which is orthogonal to this direction.

Concretely, the percentage shrinkage of the film was measured by the following method:

With the film-flow direction being the long side, three units of 10 mm-wide, 100 mm-long, strip-shaped test pieces were prepared, and, with the central portion of each of the test pieces serving as the center, 100 mm-spaced reference lines were marked. The spacing between the reference lines was read at an accuracy of 0.01 mm with calipers. This test piece was suspended in a thermostatic chamber at a predetermined temperature for 10 minutes in the no-load state, removed, then, allowed to cool at room temperature for 15 minutes or longer, and the spacing between the reference lines that was read earlier was measured. The percentage change between before and after heating of the spacing between the reference lines was determined and served as the percentage change of dimension between before and after heating.

(Measurement of total light transmittance)

The total light transmittance of the film was measured using the following apparatus by a method that follows JIS K7105:

Reflectance/transmittance meter: Murakami Color Research Laboratory Co., Ltd. "HR-100"

(Median diameter)

The median diameter of the microparticle was measured using the high-resolution scanning electron microscope (SEM) S-4500, manufactured by Hitachi High Technologies Corporation. Concretely, a digital image was acquired by setting the sample tilt angle to 30 degrees, 5 kV acceleration voltage, 15 mm soaking distance and direct magnification to 30,000 x, the particle sizes of 200 particles at random were measured from the obtained image and the average thereof determined, thereby serving as the median diameter of the microparticle.

(Relative standard deviation)

The standard deviation of the particle size of the microparticle was calculated from the median diameter and the standard deviation measured by the measurement of the median diameter described above, according to the following formula:

Relative standard deviation = standard deviation σ/median diameter d

[Table 1]

| | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|
| Storage elastic modulus (E') GPa | Base film | MD200°C | 0.29 | 0.29 | 1.56 | 1.56 | 1.56 | 0.29 | 1.56 | 0.29 | 0.29 | 0.29 |
| | | MD220°C | 0.18 | 0.18 | 1.24 | 1.24 | 1.24 | 0.18 | 1.24 | 0.18 | 0.18 | 0.18 |
| | Transparent laminated film | MD200°C | 1.4 | 2.0 | 2.5 | 2.8 | 1.67 | - | - | 0.23 | - | - |
| | | MD220°C | 1.4 | 1.5 | 2.5 | 2.5 | 1.29 | - | - | 0.10 | - | - |
| Base film material | | | PEN | PEN | PEI | PEI | PEI | PEN | PEI | PEN | PEN | PEN |
| Material of the cured layer | | | A-DCP | A-DCP | A-DCP | A-DCP | A-DCP | - | - | GX-8801A | A-DCP | A-DCP |
| Thickness constitution of transparent laminated film | Thickness of base film (µm) | | 12 | 12 | 7 | 7 | 7 | 12 | 7 | 12 | 12 | 12 |
| | Thickness sum of cured layers (µm) | | 10 | 20 | 10 | 20 | 10 | - | - | 6 | 10 | 10 |
| | Thickness ratio (cured layers/base material) | | 83% | 167% | 143% | 286% | 143% | - | - | 50% | 83% | 83% |
| Microparticle filling amount of cured layer (percent in volume) | | | 63.4 | 63.4 | 63.4 | 63.4 | - | - | - | - | 63.4 | 63.4 |
| Median diameter of microparticles (nm) | | | 10 | 10 | 10 | 10 | - | - | - | - | 255 | 403 |
| Relative standard deviation of microparticles | | | 40.3% | 40.3% | 40.3% | 40.3% | - | - | - | - | 72.9% | - |
| Total light transmittance | | | 91% | 91% | 92% | 93% | 90% | 85% | 88% | 87% | 67% | 55% |
| Percentage shrinkage | | MD200°C | 0.24% | 0.17% | 0.32% | 0.17% | 1.00% | 1.82% | 1.01% | 0.49% | 0.22% | - |
| | | TD200°C | 0.40% | 0.20% | 0.56% | 0.40% | 0.21% | 1.39% | -0.09% | 1.21% | 0.30% | - |
| | | MD220°C | 0.6% | 0% | 0.45% | 0.13% | 1.10% | 3.46% | 1.13% | 1.10% | 0.53% | - |
| | | TD220°C | 0.85% | 0.25% | 0.63% | 0.30% | 0.25% | 2.86% | -0.22% | 1.32% | 0.51% | - |

(Discussion 1)

From the results of Examples 1 to 5 and Comparative Examples 1 to 5, the following a) to d) were found. Then, from these discussions, it was found that a high dimensional stability could be maintained even under high temperature conditions by letting the laminated film to be of such a constitution that the storage elastic modulus (E') of the transparent laminated film at 200°C temperature is greater than the storage elastic modulus (E') of the base film in the same conditions.
a) With a constitution in which a cured layer is laminated on both sides of a base film, by letting the thickness sum of the cured layers be larger than the thickness of the base film to increase the contribution of the cured layer with respect to heat dimensional stability, and letting the constitution be such that the storage elastic modulus (E') of the transparent laminated film at 200°C temperature is greater than the storage elastic modulus (E') of the base film in the same conditions, allow a transparent laminated film having a high dimensional stability while at high temperatures (for instance, 200°C or higher) to be obtained.

b) With a constitution in which a cured layer is laminated on both sides of a base film, by including microparticles of a high heat dimensional stability within the cured layers, and letting the constitution be such that the storage elastic modulus (E') of the transparent laminated film at 200°C temperature is greater than the storage elastic modulus (E') of the base film in the same conditions, allows a transparent laminated film having a high dimensional stability while at high temperatures (for instance, 200°C or higher) to be obtained.

c) With a constitution in which a cured layer is laminated on both sides of a base film, by including microparticles for which the standard deviation of the particle size is 50% or less inside the cured layers, the distances between the particles are shortened and the cured layers become more robust against the shrinkage stress of the base material, allowing a transparent laminated film having a high dimensional stability while at high temperatures (for instance, 200°C or higher) to be obtained.

d) With a constitution in which a cured layer is laminated on both sides of a base film, using a resin having a rigid backbone as the material forming the cured layers, and letting the constitution be such that the storage elastic modulus (E') of the transparent laminated film at 200°C temperature is greater than the storage elastic modulus (E') of the base film in the same conditions, allows a transparent laminated film having a high dimensional stability while at high temperatures (for instance, 200°C or higher) to be obtained.

[Example 6]

(Preparation of curable resin composition)

Homogeneously mixed were 7.8 parts by mass of a photocurable bifunctional acrylate monomers/oligomers having a tricyclodecane structure, which is a rigid backbone (manufactured by Shin-Nakamura Chemical Co., Ltd.; product name: "A-DCP"; refractive index: 1.50), 92.0 parts by mass of transparent microparticle E which median diameter was 13 nm (manufactured by Nissan Chemical Industries, Ltd.; product name "MEK-AC-2101"; organic solvent-dispersed colloidal silica dispersion solution; refractive index: 1.46) and 0.2 parts by mass of a photocuring agent (1-hydroxycyclohexyl-phenyl ketone (manufactured by BASF)) to obtain a curable resin composition for cured layer formation use (hereafter referred to as "coat E".
The proportion by volume of colloidal silica in the cured layer of this example was 70% by volume.

(Preparation of transparent laminated film 6)

On one side of the film B, the coat E prepared above was applied using a wire bar coater in such a manner that the thickness after curing was 10 $\mu$m, then, the solvent was dried and eliminated by introduction inside an oven set to 120°C for 10 minutes, the extremity of the film in an immobilized state was introduced into a belt conveyor apparatus and a high-pressure mercury lamp (160 W/cm) was shone on the coated side to obtain a film having a photocurable cured layer on one side.
By applying the coat E and carrying out curing similarly to above on the side of the film where this cured layer was not formed, a transparent laminated film 6 with a cured layer formed on both sides was obtained.
The properties of the obtained transparent layer film 6 were evaluated according to the measurement methods described below.

[Example 7]

(Preparation of transparent laminated film 7)

On one side of the film A, the coat E prepared above was applied using a wire bar coater in such a manner that the thickness after curing was 10 $\mu$m, then, the solvent was dried and eliminated by introduction inside an oven set to 120°C for 10 minutes, the extremity of the film in an immobilized state was introduced into a belt conveyor apparatus and a high-pressure mercury lamp (160 W/cm) was shone on the coated side to obtain film having a photocurable cured layer on one side.

By applying the coat E and carrying out curing similarly to above on the side of the film where this cured layer was not formed, a transparent laminated film 7 with a cured layer formed on both sides was obtained.

The properties of the obtained transparent layer film 7 were evaluated according to the measurement methods described below.

[Example 8]

(Preparation of transparent laminated film 8)

By a similar procedure to Example 5, the coat B prepared above was applied and cured on one side of the film B in such a manner that the thickness after curing was 5 $\mu$m, thereby obtaining a transparent laminated film 8 with a cured layer formed on both sides.

The physical properties of the obtained transparent laminated film 8 were evaluated according to the measurement methods described below.

[Comparative Example 6]

A film B having no cured layer was evaluated similarly to Example 6.

[Comparative Example 7]

A film A having no cured layer was evaluated similarly to Example 6.

<Property evaluation and measurement conditions 2>

The storage elastic modulus (E'), the total light transmittance, the percentage shrinkage and the linear expansion coefficient were measured for the films prepared in the Examples 6 to 8 as well as the Comparative Examples 6 and 7 above.

Regarding the linear expansion coefficient, it was measured according to the method indicated below.

The storage elastic modulus (E') and the total light transmittance were measured according to a similar method to the above Example 1.

Regarding the percentage shrinkage, it was measured according to a similar method to the above Example 1, except the point that the temperature of the thermostatic chamber was changed from 120°C to 200°C, 220°C and 250°C, respectively.

In addition, also in regard to the microparticles used in the above examples, they were measured according to a similar method to the above Example 1.

The respective measurement results are shown in Table 2.

(Linear expansion coefficient)

The linear expansion coefficients of the films prepared in the Examples 6 to 8 as well as the Comparative Examples 6 and 7 were measured by thermomechanical analysis (TMA method) using a thermal stress and strain measurement device (manufactured by Seiko Instruments Inc., TMA/SS6100).

The measurement conditions were 45 mm test piece width, 15 mm inter-chuck distance and 0.1 g load, and the coefficients were determined from the dimensional change of the test piece measured when heating from room temperature to 250°C at 3°C/minute temperature increase rate.

[Table 2]

| | | | Example 6 | Example 7 | Example 8 | Comparative Example 6 | Comparative Example 7 |
|---|---|---|---|---|---|---|---|
| Storage elastic modulus (E') GPa | Base film | MD200°C | 1.56 | 0.29 | 1.56 | 1.56 | 0.29 |
| | | MD220°C | 1.24 | 0.18 | 1.24 | 1.24 | 0.18 |
| | Transparent laminated film | MD200°C | 3.44 | 1.79 | 1.67 | - | - |
| | | MD220°C | 3.14 | 1.58 | 1.29 | - | - |
| Thickness constitution of transparent laminated film | Thickness of base film (μm) | | 7 | 12 | 7 | 7 | 12 |
| | Thickness sum of cured layers (μm) | | 20 | 20 | 10 | - | - |
| | Thickness ratio (cured layers/base material) | | 286% | 167% | 143% | - | - |
| Filler filling amount of cured layer (percent by volume) | | | 70 | 70 | - | - | - |
| Median diameter of microparticles (nm) | | | 13 | 13 | - | - | - |
| Relative standard deviation of microparticles | | | 47.8% | 47.8% | - | - | - |
| Total light transmittance | | | 92.5% | 91.1% | 90.2% | 87.7% | 85.0% |
| Percentage shrinkage | MD200°C | | 0.06% | 0.08% | 1.00% | 1.01% | 1.82% |
| | TD200°C | | 0.22% | 0.04% | 0.21% | -0.09% | 1.39% |
| | MD220°C | | 0.08% | 0.20% | 1.10% | 1.13% | 3.46% |
| | TD220°C | | 0.22% | 0.30% | 0.25% | -0.22% | 2.86% |
| | MD250°C | | 0.46% | 0.28% | 4.18% | 41.2% | 6.00% |
| | TD250°C | | 0.23% | 0.35% | 0.05% | -5.28% | 8.60% |
| Linear expansion coefficient (ppm/°C) | MD0~50°C | | 9.4 | 6.0 | 42.2 | 28.4 | 0.9 |
| | MD50~100°C | | 6.3 | 5.9 | 47.4 | -2.2 | -1.4 |
| | MD100~150°C | | 19.2 | 24.7 | 50.6 | -30.9 | -81.3 |
| | MD150~200°C | | 0.5 | 9.7 | 29 | -290 | -719.2 |
| | MD200~250°C | | 23.1 | -56.2 | 95.7 | -1995 | -1446.6 |
| | TD0~50°C | | 6.2 | -0.4 | 52.3 | -37.6 | 1.5 |
| | TD50~100°C | | 10.2 | -2.1 | 13.7 | 3.5 | 18.9 |
| | TD100~150°C | | 13.2 | 22.7 | 16.4 | -40.2 | -182.0 |
| | TD150~200°C | | 0.8 | 14.0 | 23.3 | -452.4 | -808.6 |
| | TD200~250°C | | -6.9 | -59.6 | 43.1 | -467.6 | -1699.9 |

(Discussion 2)

From the results of the Examples 6 to 8 as well as the Comparative Examples 6 and 7 above, the following e) and f) were found:

e) With a constitution in which a cured layer is laminated on both sides of a base film, by letting the thickness sum of the cured layers be 150% or more of the base film, the contribution of the cured layer with respect to heat dimensional stability becomes prominent, allowing a transparent laminated film having a high dimensional stability while at high temperatures (for instance, 200°C or higher) to be obtained.

f) With a constitution in which a cured layer is laminated on both sides of a base film, by including microparticles of a high heat dimensional stability within the cured layers and letting the percentage content of microparticle be 50% by volume or greater in the entirety of the cured layer, the contribution of the cured layer with respect to heat dimensional stability becomes prominent, allowing a transparent laminated film having a high dimensional stability while at high temperatures (for instance, 200°C or higher) to be obtained.

[Example 9] (outside the scope of the present invention)

(Preparation of curable resin composition)

Homogeneously mixed were 66.6 parts by mass of a transparent resin (manufactured by Arakawa Chemical Industries, Ltd.; product name "HBSQ1004-2"; thiol series silsesquioxane) and 33.3 parts by mass of a photocuring agent (manufactured by Arakawa Chemical Industries, Ltd.; product name "HBSQ2001-3", multifunctional acrylate) to obtain a curable resin composition for cured layer formation use (storage elastic modulus (E') (a) at 220°C temperature: 1.1GPa; storage elastic modulus (E') (b) at 25°C temperature:1.3GPa; hereafter referred to as "coat F").

(Preparation of transparent laminated film 9)

On one side of the film A (Tg: 155°C; storage elastic modulus (E') (a)at 220°C temperature:0.27 GPa; storage elastic modulus (E') (b) at 25°C temperature: 7.3 GPa), the coat F prepared above was applied using a wire bar coater in such a manner that the thickness after curing was 10 $\mu$m, then, the solvent was dried and eliminated by introduction inside an oven set to 100°C for 10 minutes, the extremity of the film in an immobilized state was introduced into a belt conveyor apparatus, a high-pressure mercury lamp (250 mJ/cm$^2$) was shone on the coated side, and further, the cured film was annealed at 120°C for on the order of 15 minutes, thereby obtaining a film having a photocurable cured layer on one side.

By applying the coat F and carrying out curing similarly to above on the side of the film where this cured layer was not formed, a transparent laminated film 9 with a cured layer formed on both sides was obtained.

The properties of the obtained transparent layer film 9 were evaluated according to the measurement methods described below.

[Example 10]

(Preparation of transparent laminated film 10)

On one side of the film B (Tg: 234.4°C; storage elastic modulus (E') (a) at 260°C temperature: 7.5 MPa; storage elastic modulus (E') (b) at 25°C temperature: 2.8 GPa), the coat F prepared above (storage elastic modulus (E') (a) at 260°C temperature:1.0 GPa; storage elastic modulus (E') (b) at 25°C temperature: 1.3GPa) was applied using a wire bar coater in such a manner that the thickness after curing was 10 $\mu$m, then, the solvent was dried and eliminated by introduction inside an oven set to 100°C for 10 minutes, the extremity of the film in an immobilized state was introduced into a belt conveyor apparatus, a high-pressure mercury lamp (250 mJ cm$^{-1}$) was shone on the coated side, and further, the cured film was annealed at 120°C for on the order of 15 minutes, thereby obtaining a film having a photocurable cured layer on one side.

By applying the coat F and carrying out curing similarly to above on the side of the film where this cured layer was not formed, a transparent laminated film 10 with a cured layer formed on both sides was obtained.

The properties of the obtained transparent layer film 10 were evaluated according to the measurement methods described below.

[Comparative Example 8]

The film B having no cured layer was evaluated similarly to Example 9.

[Comparative Example 9]

The film A having no cured layer was evaluated similarly to Example 9.

<Property evaluation and measurement conditions 3>

The storage elastic modulus (E'), the light transmittance and the percentage shrinkage were measured for the films prepared in the Examples 9 to 10 and the Comparative Examples 8 to 9 above, according to similar methods to Example 1 described above. The respective measurement results are shown in Table 3.

[Table 3]

| | | | Example 9 | Example 10 | Comparative Example 8 | Comparative Example 9 |
|---|---|---|---|---|---|---|
| Storage elastic modulus (E') GPa | Base film | MD200°C | 0.29 | 1.56 | 1.56 | 0.29 |
| | | MD220°C | 0.18 | 1.24 | 1.24 | 0.18 |
| | Transparent laminated film | MD200°C | 1.25 | 1.58 | - | - |
| | | MD220°C | 1.15 | 1.26 | - | - |
| Base film Tg | | | 155°C | | | |
| Base film (E')a | | | 7.3GPa (25°C)/ 0.27GPa (220°C) | 2.8GPa (25°C)/ 7.5MPa (260°C) | 2.8GPa (25°C)/ 7.5MPa (260°C) | 7.3GPa (25°C)/ 0.27GPa (220°C) |
| Cured layer (E')b | | | 1.3GPa (25°C)/ 1.1GPa (220°C) | 1.3GPa (25°C)/ 1.0GPa (260°C) | - | - |
| Thickness constitution of transparent laminated film | Thickness of base film (μm) | | 12 | 7 | 7 | 12 |
| | Thickness sum of cured layers (μm) | | 20 | 20 | - | - |
| | Thickness ratio (cured layers/ base material) | | 166% | 286% | - | - |
| Filler filling amount of cured layer (parts by volume weight) | | | - | - | - | - |
| Total light transmittance | | | 89.1% | 90.7% | 87.7% | 85.0% |
| Percentage shrinkage | MD200°C | | 0.46% | 0.27% | 1.01% | 1.82% |
| | TD200°C | | 0.89% | 0.03% | -0.09% | 1.39% |
| | MD220°C | | 0.81% | 0.67% | 1.13% | 3.46% |
| | TD220°C | | 0.86% | 0.03% | -0.22% | 2.86% |

(Discussion 3)

From the results of the Examples 9 to 10 and the Comparative Examples 8 and 9 above, the following g) and h) were found:

g) With a constitution in which a cured layer is laminated on both sides of a base film, by using a resin having a rigid backbone as material for forming the cured layer, the contribution of the cured layer with respect to heat dimensional stability becomes large, allowing a transparent laminated film having a high dimensional stability while at high temperatures (for instance, 200°C or higher) to be obtained.

h) With a constitution in which a cured layer is laminated on both sides of a base film, by using a resin having a rigid backbone as material for forming the cured layer, the storage elastic modulus (E') (a) at temperatures that are 20°C lower than the glass transition temperature of the base film, or below, being smaller than the storage elastic modulus of the base film under the same conditions, and the storage elastic modulus (E') (b) at temperatures that are 20°C higher than the glass transition temperature of base film, or above, being larger than the storage elastic modulus of the base film under the same conditions for the cured layer, the contribution of the cured layer with respect to heat dimensional stability becomes large, allowing a transparent laminated film having a high dimensional stability while at high temperatures (for instance, 200°C or higher) to be obtained.

[Example 11]

(Preparation of photocurable resin composition)

Homogeneously mixed were 100 parts by mass of the composition EA-HG001 containing 40 to 60 mass% of fluorene acrylate (manufactured by Osaka Gas Chemicals Co., Ltd.), 50 parts by mass of 2-butanone (manufactured by Nacalai Tesque), and, 3 parts by mass of 1-hydroxycyclohexyl-phenyl ketone (manufactured by BASF) to obtain a photocurable resin composition (hereafter referred to as "coat G").

(Preparation of transparent laminated film 11)

On one side of the film A (storage elastic modulus at 200°C: 0.332 GPa in the longitudinal direction, 0.305 GPa in the transversal direction; linear expansion coefficient at 150 to 200°C: -719 ppm/°C in the longitudinal direction, -809 ppm/°C in the transversal direction), the coat G prepared above was applied using a wire bar coater in such a manner that the thickness after curing was 1 $\mu$m, then, the solvent was dried and eliminated by introduction inside an oven set to 80°C for 2 minutes, the extremity of the film in an immobilized state was introduced into a belt conveyor apparatus and the coated side was irradiated at a UV accumulation amount of 335 mJ/cm$^2$ using a high-pressure mercury lamp (160 W/cm) to obtain a film having a cured layer of photocurable resin composition on one side.
The UV accumulation amount was measured by passing an accumulated UV meter (manufactured by USHIO Inc.; UNIMETER UIT-250 and UVD-C365) through a belt conveyor apparatus similarly to when curing and shining high-pressure mercury lamp (160 W/cm) on the sensor portion.
By applying the coat G and carrying out curing similarly to above on the side of the film where this cured layer was not formed, a transparent laminated film 11 with a cured layer formed on both sides was obtained.
The properties of the obtained transparent layer film 11 were evaluated according to the measurement methods described below.

[Example 12]

(Preparation of transparent laminated film 12)

It was carried out similarly to Example 11, except that the coat G was applied using a wire bar coater in such a manner that the thickness after curing was 3 $\mu$m, to obtain a transparent laminated film 12 with a cured layer formed on both sides.
The properties of the obtained transparent layer film 12 were evaluated according to the measurement methods described below.

[Example 13]

(Preparation of transparent laminated film 13)

Homogeneously mixed were 100 parts by mass of the composition U-6LPA containing 60 to 70 mass% of urethane acrylate (manufactured by Shin-Nakamura Chemical Co., Ltd.), 100 parts by mass of 2-butanone (manufactured by Nacalai Tesque), and 3 parts by mass of 1-hydroxy cyclohexyl-phenyl ketone (manufactured by BASF) to obtain a photocurable resin composition (hereafter referred to as "coat H"). Then, a transparent laminated film 13 with a cured layer formed on both sides was obtained similarly to Example 11 except that the coat H was used alternatively to the coat G in Example 11.

The properties of the obtained transparent layer film 13 were evaluated according to the measurement methods described below.

[Example 14]

(Preparation of transparent laminated film 14)

It was carried out similarly to Example 11, except that a 12 μm-thick Diafoil T100 (manufactured by Mitsubishi Plastics Inc.; polyethylene terephthalate (PET) film, storage elastic modulus at 200°C: 0.234 GPa in the longitudinal direction, 0.201 GPa in the transversal direction; linear expansion coefficient at 150 to 200°C: -864 ppm/°C in the longitudinal direction, -153 ppm/°C in the transversal direction; hereafter referred to as "film C") was used alternatively to the film A and the coat G used in Example 11 was applied using a wire bar coater in such a manner that the thickness after curing was 6 μm, to obtain a transparent laminated film 14 with a cured layer formed on both sides.

The properties of the obtained transparent layer film 14 were evaluated according to the measurement methods described below.

[Example 15]

(Preparation of transparent laminated film 15)

Homogeneously mixed were 100 parts by mass of the composition EA-HG001 containing 40 to 60% mass% of fluorene acrylate (manufactured by Osaka Gas Chemicals Co., Ltd.), 500 parts by mass of colloidal silica MEK-ST-L (manufactured by Nissan Chemical Industries, Ltd.; MEK dispersion silica; median diameter: approximately 50 nm; solid content: approximately 30%) and 3 parts by mass of 1-hydroxycyclohexyl-phenyl ketone (manufactured by BASF; Irgacure 184) to obtain a photocurable resin composition (hereafter referred to as "coat I"). Then, it was carried out similarly to Example 11, except that the coat I was used alternatively to the coat G in Example 11, to obtain a transparent laminated film 15 with a cured layer formed on both sides.

The properties of the obtained transparent layer film 15 were evaluated according to the measurement methods described below.

Despite the ratio of the cured layer thickness against the base film thickness being equivalent to Example 11, the obtained film is a film with extremely excellent dimensional stability while at high temperatures as it contains inorganic microparticles of a high resistance to heat within the cured layers.

[Example 16]

(Preparation of transparent laminated film 16)

It was carried out similarly to Example 11, except that a 25 μm-thick TEONEX Q51 (manufactured by Teijin Limited; polyethylene naphthalate film; storage elastic modulus at 200°C: 0.266 GPa in the longitudinal direction, 0.270 GPa, in the transversal direction; linear expansion coefficient at 150 to 200°C: -491 ppm/°C in the longitudinal direction, -201 ppm/°C in the transversal direction; hereafter referred to as "film D".) was used alternatively to the film A and the coat I used in Example 15 was applied using a wire bar coater in such a manner that the thickness after curing was 4 μm, to obtain a transparent laminated film 16 with a cured layer formed on both sides.

The properties of the obtained transparent layer film 16 were evaluated.

[Example 17]

The transparent laminated film 12 obtained in Example 12 was cut into a size of 100 mm lengthwise × 10 mm widthwise, introduced into an oven set to 200°C for 10 minutes, removed from the oven and returned to room temperature, and then, the amount of shrinkage in the longitudinal direction was measured with an accuracy of 0.1 mm using calipers.

Similarly, the laminated film was cut into a size of 10 mm lengthwise × 100 mm widthwise, introduced into an oven set to 200°C for 10 minutes, removed from the oven and returned to room temperature, and then, the amount of shrinkage in the transversal direction was measured with an accuracy of 0.1 mm using calipers.

For the heat-shrinking percentage, the ratio of the amount of shrinkage with respect to the original size prior to shrinkage was expressed with a percentage value for the longitudinal direction and the transversal direction.

The heat-shrinking percentage of the obtained film is shown in Table 4.

[Example 18]

(Preparation of transparent laminated film 17)

It was carried out similarly to Example 15, except that the coat I was applied using a wire bar coater in such a manner that the thickness after curing was 3 μm, to obtain a transparent laminated film 17 with a cured layer formed on both sides.

The obtained transparent laminated film 17 was evaluated similarly to Example 17, and the results thereof are shown in Table 4.

[Example 19]

(Preparation of transparent laminated film 18)

The ends on the four sides of a film A cut into A4 size were immobilized to a metal frame and introduced into an oven set to 200°C for 60 minutes to carry out a heat-setting treatment. It was carried out similarly to Example 18, except that the removed film was used as the base material, to obtain a transparent laminated film 18 with a cured layer formed on both sides.

The obtained transparent laminated film 18 was evaluated similarly to Example 17, and the results thereof are shown in Table 4. Since the shrinkage of the base material was alleviated, the obtained film was a film with an extremely low heat-shrinking percentage.

[Example 20]

Gas barrier fabrication was performed over the transparent laminated film 12 obtained in Example 12. Using a vacuum deposition apparatus, SiO was evaporated by the heating method under vacuum at $1 \times 10^{-5}$ Torr and an approximately 50 nm-thick inorganic layer of SiOx was formed over the laminated film to obtain a gas barrier film.

The obtained gas barrier film was evaluated for the moisture vapor transmission rate in accordance with the various conditions of JIS Z0222 "Method of Permeability Test for Moisture-Proof Packing Case" and JIS Z0208 "Testing Methods for Determination of the moisture vapor transmission rate of Moisture-Proof Packaging Materials (dish method)", by the following technique:

(Moisture vapor transmission rate)

On the surface of a 60 μm-thick stretched polypropylene film (manufactured by Toyobo Co., Ltd.; P1146), a urethane based adhesive (manufactured by Toyo-Morton, Ltd.; AD900 and CAT-RT85 mixed at a ratio of 10:1.5) was applied and dried to form an approximately 3 μm-thick adhesive layer, and over this adhesive layer, the inorganic layer surface side of the gas barrier film formed above was laminated to obtain a gas-barrierized laminated film.

Next, two gas-barrierized laminated films, each with a 10.0 cm × 10.0 cm square moisture-permeation surface area, were used to prepare a bag with approximately 20 g anhydrous calcium chloride introduced as moisture absorbent and sealed on four sides. This bag was introduced in a constant temperature and humidity apparatus at 40°C temperature and 90% relative humidity, mass-measured until approximately day 200 at an interval of 72 hours or longer, and the moisture vapor transmission rate [g/(m²·day)] was calculated from the slope of the regression line between the elapsed time and the bag mass from day 4 and later. The obtained moisture vapor transmission rate was 0.055 [g/(m²·day)].

In the above measurements, the moisture vapor transmission rate on the fourth day of the measurements was 0.055 g/m²·day.

<Property evaluation and measurement conditions 4>

For the films prepared in the Examples 11 to 19, the storage elastic modulus (E') and the linear expansion coefficient were measured according to the methods described below. The respective results are shown in Table 4.

In addition, regarding the microparticles used in the Examples 15, 16, 18 and 19, the median diameter was measured in a similar manner to Example 1.

In addition, the total light transmittance was also measured in a similar manner to Example 1.

(Measurement method for storage elastic modulus (E'))

The storage elastic modulus (E') of the film at 200°C temperature was determined from the data obtained by measuring for the longitudinal direction (MD direction), which is the longer direction of the film, and the transversal direction (TD direction), which is orthogonal to this direction, the viscoelasticity behavior from 25°C to 250°C at 10 Hz oscillation frequency, 0.1% distortion and 3°C/minute temperature increase rate, by the dynamic viscoelasticity measurement method described in JIS K-7198 method A, using a dynamic viscoelasticity measurement device "DVA-200" manufactured by IT Keisoku Seigyo K.K.

(Measurement method for the linear expansion coefficient)

The linear expansion coefficient of the film was measured using a thermomechanical analyzer (manufactured by Seiko Instruments Inc., TMA-120). It was determined as the proportion of the amount of dimensional change of the test piece [(dimensional change between 150°C and 200°C/dimension value at 150°C)/amount of temperature change] $\times 10^6$ (ppm/°C) measured from 150°C to 200°C when heating from 25°C to 250°C at 2°C/minute temperature increase rate with 3 mm test piece width, 10 mm inter-chuck distance and 0.1 mN load for the measurement conditions.

[Table 4]

| | | | Example 11 | Example 12 | Example 13 | Example 14 | Example 15 | Example 16 | Example 17 | Example 18 | Example 19 |
|---|---|---|---|---|---|---|---|---|---|---|---|
| Photocurable resin | OGSOL EA-HG001 | | 100 | 100 | | 100 | 100 | 100 | 100 | 100 | 100 |
| | NK Oligo U-6LPA | | | | 100 | | | | | | |
| Filler | MEK-ST-L | | | | | | 500 | 500 | | 500 | 500 |
| Initiator | IRGACURE 184 | | 3 | 3 | 3 | 3 | 3 | 3 | 3 | 3 | 3 |
| Solvent | MEK | | 50 | 50 | 100 | 50 | | | 50 | | |
| Base resin | | | PEN | PEN | PEN | PEN | PEN | PEN | PEN | PEN | PEN |
| Base material thickness ($\mu$m) | | | 12 | 12 | 12 | 12 | 12 | 25 | 12 | 12 | 12 |
| Microparticle filling amount of cured layer (percent in volume) | | | | | | | 47 | 47 | | 47 | 47 |
| Median diameter of microparticles (nm) | | | | | | | 50 | 50 | | 50 | 50 |
| Cured layer thickness sum ($\mu$m) [Ratio with respect to base material thickness (%)] | | | 2[17] | 6[50] | 2[17] | 12[100] | 2[17] | 8[32] | 6[50] | 6[50] | 6[50] |
| Coated side | | | Both sides | Both sides | Both sides | Both sides | Both sides | Both sides | Both sides | Both sides | Both sides |
| Storage elastic modulus (E') GPa | Base film | MD200°C | 0.33 | 0.33 | 0.33 | 0.33 | 0.33 | 0.27 | 0.33 | 0.33 | 0.33 |
| | | TD200°C | 0.31 | 0.31 | 0.31 | 0.31 | 0.31 | 0.27 | 0.31 | 0.31 | 0.31 |
| | Transparent laminated film | MD200°C | 0.42 | 0.84 | 0.85 | 0.50 | 1.53 | 1.45 | 0.84 | 1.89 | 2.42 |
| | | TD200°C | 0.39 | 0.77 | 0.78 | 0.48 | 1.44 | 1.45 | 0.77 | 1.69 | 2.19 |
| | Linear expansion coefficient at 150° C to 200° C [ppm/° C] | MD direction | -76.34 | -8.65 | -58.51 | -0.11 | -11.04 | -18.29 | -8.65 | - | - |
| | | TD direction | -79.91 | 5.58 | -38.95 | -42.97 | -2.68 | -17.45 | 5.58 | - | - |
| Total light transmittance | | | 89% | 89% | 90% | 90% | 90% | 89% | 89% | 90% | 90% |
| Heat-setting treatment | | | No | No | No | No | No | No | No | No | Yes |
| Percentage shrinkage at 200° C and 10 minutes | MD direction | | - | - | - | - | - | - | 0.50 | 0.36 | 0.00 |
| | TD direction | | - | - | - | - | - | - | 0.65 | 0.39 | 0.00 |

(Discussion 4)

From the results of the Examples 11 to 19, the following i), j) and k) were found :

i) Along with the cured layer total thickness relative to the base material thickness becoming larger, the contribution of the cured layer regarding heat dimensional stability becomes larger, allowing the linear expansion coefficient to be held down as a result.

j) In addition, by including microparticles of a high heat dimensional stability within the cured layers, the heat dimensional stability of the cured layer *per se* becomes high, further allowing the linear expansion coefficient to be held down.

k) The heat dimensional stability of the entirety of the laminated film can be further improved by elevating the heat dimensional stability of the base material *per se* by heat treatment.

[Industrial applicability]

The transparent laminated film of the present invention can be used in applications that require dimensional stability at high temperatures, in particular, films for packaging use, substrates for display materials such as for liquid crystal displays, organic light-emitting displays (OLEDs), electrophoretic displays (electronic papers), touch panels, color filters and back lights, films for electronic component use, such as substrates for solar battery, and the like.

**Claims**

1. A transparent laminated film, which is a laminated film having a cured layer on both a front and a back sides of a base film, wherein
the cured layer comprises a photocurable resin having a cyclic aliphatic hydrocarbon backbone, aromatic hydrocarbon backbone, cyclic acetal backbone, cyclic ketone backbone, or siloxane backbone; and having a glass transition temperature (Tg) which is higher than 200°C,
a storage elastic modulus (E') by dynamic viscoelasticity measurement in at least one direction of the laminated film at a temperature of 200°C is greater than a storage elastic modulus (E') in at least one direction of the base film in the same conditions, and
a total light transmittance of the laminated film is 80% or greater.

2. The transparent laminated film according to claim 1, wherein the sum of the thicknesses of the cured layers is greater than the thickness of the base film.

3. The transparent laminated film according to claim 1 or 2, wherein the sum of the thicknesses of the cured layers is 150% or more of the thickness of the base film.

4. The transparent laminated film according to any of claims 1 to 3, wherein the storage elastic modulus (E') by dynamic viscoelasticity measurement in at least one direction of the laminated film at 200°C temperature exceeds 1.0 times the storage elastic modulus (E') of the base film in the same conditions.

5. The transparent laminated film according to any of claims 1 to 4, wherein the storage elastic modulus (E') by dynamic viscoelasticity measurement in at least one direction of the laminated film at 200°C temperature is 1 GPa or greater.

6. The transparent laminated film according to any of claims 1 to 5, wherein the photocurable resin contains a fluorene backbone as an aromatic hydrocarbon backbone.

7. The transparent laminated film according to any of claims 1 to 6, wherein the cured layer contains a curable resin and a microparticle with a median diameter of 200 nm or less;
the percentage content of microparticle is 50% by volume or greater in the entirety of the cured layer; and
the refractive index difference between the microparticle and the resin contained in the cured layer is less than 0.2.

8. The transparent laminated film according to claim 7, wherein the refractive index of the microparticle is less than 1.6.

9. The transparent laminated film according to claim 7 or 8, wherein the relative standard deviation of the particle size is 50% or less for the microparticles.

10. The transparent laminated film according to any of claims 7 to 9, wherein the microparticle is colloidal silica.

11. The transparent laminated film according to any of claims 1 to 10, wherein the base film contains any one or more species of resin chosen from the group comprising polyether imide resin, polyphenylene sulfide resin, polyether sulfone resin, polyester based resin and transparent polyimide resin.

12. The transparent laminated film according to any of claims 1 to 11, wherein the base film is a biaxially stretched polyester film which is heat-setting treated for the purpose of alleviating shrinkage.

13. The transparent laminated film according to any of claims 1 to 12, wherein, after heating at 220°C temperature for 10 minutes, the percentage shrinkages in the longitudinal direction and the transversal direction measured at room temperature (25°C) are less than 1% as measured according to JIS-C23307.4.6.1 (Percentage Change of Dimension by Shrinkage: Method A).

**Patentansprüche**

1. Transparente laminierte Folie, die eine laminierte Folie ist, die eine gehärtete Schicht sowohl auf der Vorderseite als auch auf der Rückseite einer Basisfolie aufweist, wobei
die gehärtete Schicht ein lichthärtbares Harz mit einem cyclischen aliphatischen Kohlenwasserstoffgrundgrüst, aromatischen Kohlenwasserstoffgrundgerüst, cyclischen Acetalgrundgerüst, cyclischen Ketongrundgerüst oder Siloxangrundgerüst und mit einer Glasübergangstemperatur (Tg), die höher als 200°C ist, umfasst,
ein Speicherelastizitätsmodul (E') mittels dynamischer Viskoelastizitätsmessung in mindestens einer Richtung der laminierten Folie bei einer Temperatur von 200°C größer als ein Speicherelastizitätsmodul (E') in mindestens einer Richtung der Basisfolie unter denselben Bedingungen ist und
eine Gesamtlichtdurchlässigkeit der laminierten Folie 80 % oder größer ist.

2. Transparente laminierte Folie gemäß Anspruch 1, wobei die Summe der Dicken der gehärteten Schichten größer als die Dicke der Basisfolie ist.

3. Transparente laminierte Folie gemäß Anspruch 1 oder 2, wobei die Summe der Dicken der gehärteten Schichten 150 % oder mehr der Dicke der Basisfolie ist.

4. Transparente laminierte Folie gemäß irgendeinem der Ansprüche 1 bis 3, wobei der Speicherelastizitätsmodul (E') mittels dynamischer Viskoelastizitätsmessung in mindestens einer Richtung der laminierten Folie bei einer Temperatur von 200°C das 1,0-fache des Speicherelastizitätsmoduls (E') der Basisfolie unter denselben Bedingungen übersteigt.

5. Transparente laminierte Folie gemäß irgendeinem der Ansprüche 1 bis 4, wobei der Speicherelastizitätsmodul (E') mittels dynamischer Viskoelastizitätsmessung in mindestens einer Richtung der laminierten Folie bei einer Temperatur von 200°C 1 GPa oder größer ist.

6. Transparente laminierte Folie gemäß irgendeinem der Ansprüche 1 bis 5, wobei das lichthärtbare Harz ein Fluorengrundgerüst als aromatisches Kohlenwasserstoffgrundgerüst enthält.

7. Transparente laminierte Folie gemäß irgendeinem der Ansprüche 1 bis 6, wobei die gehärtete Schicht ein härtbares Harz und einen Mikropartikel mit einem mittleren Durchmesser von 200 nm oder weniger enthält,
der prozentuale Mikropartikelgehalt 50 Vol.% oder größer in der gesamten gehärteten Schicht ist und
die Brechungsindexdifferenz zwischen dem Mikropartikel und dem Harz, die in der gehärteten Schicht enthalten sind, weniger als 0,2 beträgt.

8. Transparente laminierte Folie gemäß Anspruch 7, wobei der Brechungsindex des Mikropartikels weniger als 1,6 beträgt.

9. Transparente laminierte Folie gemäß Anspruch 7 oder 8, wobei die relative Standardabweichung der Partikelgröße 50 % oder weniger für die Mikropartikel beträgt.

10. Transparente laminierte Folie gemäß irgendeinem der Ansprüche 7 bis 9, wobei das Mikropartikel kolloidales Silika ist.

11. Transparente laminierte Folie gemäß irgendeinem der Ansprüche 1 bis 10, wobei die Basisfolie eine oder mehrere Spezies eines Harzes, ausgewählt aus der Gruppe, umfassend Polyetherimidharz, Polyphenylensulfidharz, Polyethersulfonharz, Polyester-basiertes Harz und transparentes Polyimidharz, enthält.

12. Transparente laminierte Folie gemäß irgendeinem der Ansprüche 1 bis 11, wobei die Basisfolie eine biaxial gestreckte Polyesterfolie ist, die zum Zwecke der Verminderung der Schrumpfung mit einer Thermofixierung behandelt ist.

13. Transparente laminierte Folie gemäß irgendeinem der Ansprüche 1 bis 12, wobei nach dem Erwärmen bei einer Temperatur von 220°C für 10 Minuten die bei Raumtemperatur (25°C) gemessenen prozentualen Schrumpfungen in Längsrichtung und Querrichtung weniger als 1 % betragen, gemessen gemäß JIS-C23307.4.6.1 (prozentuale Maßänderung durch Schrumpfung: Verfahren A) .

## Revendications

1. Film stratifié transparent, qui est un film stratifié ayant une couche durcie sur les deux faces avant et arrière d'un film de base, dans lequel
   la couche durcie comprend une résine photodurcissable ayant un squelette hydrocarboné aliphatique cyclique, un squelette hydrocarboné aromatique, un squelette acétal cyclique, un squelette de cétone cyclique ou un squelette siloxane ; et ayant une température de transition vitreuse (Tg) supérieure à 200°C ;
   un module d'élasticité au stockage (E') par mesure de viscoélasticité dynamique dans au moins une direction du film stratifié à une température de 200°C est supérieur à un module élastique au stockage (E') dans au moins une direction du film de base dans les mêmes conditions, et
   une transmittance de la lumière totale du film stratifié est égale ou supérieure à 80%.

2. Film stratifié transparent selon la revendication 1, dans lequel la somme des épaisseurs des couches durcies est supérieure à l'épaisseur du film de base.

3. Film stratifié transparent selon la revendication 1 ou 2, dans lequel la somme des épaisseurs des couches durcies est égale ou supérieure à 150 % de l'épaisseur du film de base.

4. Film stratifié transparent selon l'une quelconque des revendications 1 à 3, dans lequel le module d'élasticité au stockage (E') par mesure de viscoélasticité dynamique dans au moins une direction du film stratifié à une température de 200°C dépasse 1,0 fois le module élastique au stockage (E') du film de base dans les mêmes conditions.

5. Film stratifié transparent selon l'une quelconque des revendications 1 à 4, dans lequel le module d'élasticité au stockage (E') par mesure dynamique de viscoélasticité dans au moins une direction du film stratifié à une température de 200°C est égal ou supérieur à 1 GPa.

6. Film stratifié transparent selon l'une quelconque des revendications 1 à 5, dans lequel la résine photodurcissable contient un squelette fluorène en tant que squelette hydrocarboné aromatique.

7. Film stratifié transparent selon l'une quelconque des revendications 1 à 6, dans lequel la couche durcie contient une résine durcissable et une microparticule ayant un diamètre médian égal ou inférieur à 200 nm ;
   la teneur en pourcentage de microparticule est égale ou supérieure à 50 % en volume dans la totalité de la couche durcie ; et
   la différence d'indice de réfraction entre la microparticule et la résine contenue dans la couche durcie est inférieure à 0,2.

8. Film stratifié transparent selon la revendication 7, dans lequel l'indice de réfraction de la microparticule est inférieur à 1,6.

9. Film stratifié transparent selon la revendication 7 ou 8, dans lequel l'écart type relatif de la taille de particule est égal ou inférieur à 50 % pour les microparticules.

**10.** Film stratifié transparent selon l'une quelconque des revendications 7 à 9, dans lequel la microparticule est de la silice colloïdale.

**11.** Film stratifié transparent selon l'une quelconque des revendications 1 à 10, dans lequel le film de base contient une ou plusieurs espèces de résine choisies dans le groupe comprenant une résine polyéther imide, une résine polysulfure de phénylène, une résine polyéther sulfone, une résine à base de polyester et une résine polyimide transparente.

**12.** Film stratifié transparent selon l'une quelconque des revendications 1 à 11, dans lequel le film de base est un film polyester à étirage biaxial qui est traité thermiquement pour atténuer le rétrécissement.

**13.** Film stratifié transparent selon l'une quelconque des revendications 1 à 12, dans lequel, après chauffage à une température de 220°C pendant 10 minutes, les pourcentages de rétrécissement dans la direction longitudinale et la direction transversale mesurés à température ambiante (25 °C) sont inférieurs à 1 % tel que mesurés selon JIS-C23307.4.6.1 (variation en pourcentage de la dimension par rétrécissement : méthode A).

[Fig. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001038907 A1
- JP 2008265318 A
- JP 2001277455 A
- JP 2952769 B
- JP 2011518055 W
- JP 2007298732 A
- JP S61141738 B
- JP 2000292635 A